# EUROPEAN PATENT SPECIFICATION

(11) **EP 4 104 727 B1**
(45) Date of publication and mention of the grant of the patent: **04.09.2024**
(21) Application number: 22171532.9
(22) Date of filing: 04.05.2022
(51) Int. Cl.: A47J 43/07

(54) **BLENDER**
MIXER
MÉLANGEUR

(30) Priority: 18.06.2021 KR 20210079361
(43) Date of publication of application: 21.12.2022
(73) Proprietor: LG Electronics Inc., SEOUL 07336 (KR)
(72) Inventor: KANG, Dae-yong, Seoul 08592 (KR); JUNG, Sang-jin, Seoul 08592 (KR)
(74) Representative: Ter Meer Steinmeister & Partner

(56) References cited:
- EP-A1- 3 785 586
- CN-U- 201 996 263
- CN-U- 208 740 780

## Description

### BACKGROUND OF THE INVENTION

### Field of the Invention

The present invention relates generally to a blender. More particularly, the present invention relates to a blender in which the misassembly of a knob is prevented.

### Description of the Related Art

Generally, a blender is referred to as a mixer or crusher, and is mainly used for crushing or chopping food contained in a container body by rotating blades by the rotation of a motor.

In a normal blender, a main body having a motor operated by electricity is located at the lower side of the blender, and the container body receiving food is seated on the upper side of such a main body. Blades crushing or chopping food are provided inside the container body, and are rotated by the rotational force of the motor.

Accordingly, when a user drives the motor by using a manipulation button or a knob of the main body after putting food in the container body, the blades receiving the rotational force generated by the motor crush or chop food contained inside the container body.

Various types of blenders have recently been developed in accordance with a user's desire to facilitate the food intake of office workers due to their busy daily life. That is, a small hand blender has been developed, and a slightly larger blender has been developed that allows food to be crushed in a large capacity or at high speed.

Furthermore, a vacuum blender which cuts or crushes food by vacuumizing the inside of the container body is also disclosed such that a food material received in the container body of the blender can be processed in a fresher state.

However, each of various types of blenders is provided with electronic parts such as a motor assembly and a PCB module for controlling the operation of the blender, and during the operation of the blender, heat is generated in the motor assembly or the PCB module, and malfunction thereof occurs.

In addition, as for a manipulation part composed of a touch button, a PCB provided under the manipulation part is moved, and thus the manipulation sensitivity of the manipulation part is decreased, and manipulation thereof is not accurately performed. That is, in cooking equipment disclosed in Korean Patent No. 10-2057487 or Korean Patent No. 10-198705, a manipulation panel provided under a display part which is manipulated by a user or displays is not securely held, and thus the manipulation of the display part by a user is not accurately transmitted to the manipulation panel or a manipulation error thereof occurs.

In addition, in these prior arts, there is a problem in that when assembling multiple parts, misassembly thereof occurs due to lack of direction setting or assembly guide. Particularly, as in Korean Patent No. 10-1713194, when a circular adjustment knob or a discharge valve is provided, assembly may be erroneous in up and down or left and right directions, so misassembly thereof may occur.

### Documents of Related Art

(Patent Document 1) Korean Patent No. 10-2057487
(Patent Document 2) Korean Patent No. 10-1987055
(Patent Document 3) Korean Patent No. 10-1713194

EP 3 785 586 A1 relates to a blender including a main body including an outer case forming an outer appearance and an inner case configured to be received inside the outer case, a jar configured to be seated on the main body and provided with a blade device for crushing food, a motor assembly provided inside the inner case and configured to generate rotation power of the blade device, a main PCB device which is provided inside the inner case and on which a knob rotation shaft is mounted to input rotation of the knob rotation shaft, a knob assembly mounted on the knob rotation shaft and protruding outwardly through the outer case so that the operation of the knob assembly is manipulated by a user for operation manipulation of the motor assembly, and a supporter provided inside the inner case and supporting the main PCB device.

### SUMMARY OF THE INVENTION

Accordingly, the present invention has been made to solve the above problems occurring in the related art, and the present invention is intended to propose a blender in which the knob is aligned or oriented as desired or intended.

The present invention is intended to propose a blender which is provided with a misassembly prevention means which allows a knob to be coupled to the precise position of a main PCB module.

One or more objects of the present technique are achieved by the invention set out by the subject-matter of independent claim(s).

The present disclosure, i.e. the present technique, is intended to propose a blender in which a ring-shaped elastic member having a cushioning function is provided between a light guide and a knob ring constituting the knob.

The present disclosure is intended to propose a blender in which a guide fastening protrusion and a ring fastening part are formed respectively on the light guide and the knob ring constituting the knob such that the guide fastening protrusion and the ring fastening part correspond to each other to be coupled to each other.

The present disclosure is intended to propose a blender in which a support means supporting a touch module provided under a touch manipulation part of a main body is provided.

In addition, the present disclosure is intended to propose a blender in which air introduced into the main body passes through the inside of each of a PCB module and a motor assembly and is discharged to a side under the main body.

According to the invention, a blender is provided with a misassembly prevention means which guides or allows a knob to be coupled to the precise position of a main PCB module.

According to the invention a blender is provided. The blender includes: a container body in which food is received; the main body provided under the container body and configured to support the container body; and a container lid mounted detachably to the upper surface of the container body and configured to open and close the upper surface of the container body, wherein the main body is provided with the knob to which rotation manipulation is input, the main PCB module to which the knob is coupled, and the misassembly prevention means which allows the knob to be coupled to the precise position of the main PCB module.

In other words, the misassembly prevention means may function to guide the knob to be coupled to a predetermined orientation (e.g. predetermined alignment or position) with respect to the main PCB module.

A portion of the misassembly prevention means may be provided in a light guide which guides light emitted from the LED of the main PCB module.

A guiding protrusion or a guide fastening protrusion by which components of the knob are coupled to each other may have a tapered shape so as to have a diameter decreasing gradually toward an end thereof. Accordingly, the assembly of the associated components may be efficiently performed.

The guiding protrusion and the guiding hole include multiple guiding protrusions and multiple guiding holes, respectively.

The multiple guiding protrusions have sizes different from each other, and the multiple guiding holes have sizes different from each other.

The knob may include a knob decoration constituting the exterior of the knob, a knob body received in the knob decoration, and the light guide which guides light emitted by the LED of the main PCB module, wherein any one of the guiding protrusion and the guiding hole may be provided in the light guide.

A knob rotation shaft to which the knob is mounted may be provided on the main PCB module.

The knob rotation shaft may be coupled to the knob to be rotated along with the knob, for example may be coupled to the knob at a rotational center of the knob. Thus, when the knob is manipulated or rotated, the knob rotation shaft is rotated together with the knob.

The knob rotation shaft structurally and/or functionally couples the knob to the main PCB module such that rotational input provided to the knob is received by the main PCB module.

The light guide may include a shaft passing hole through which knob rotation shaft passes, for example, for coupling the main PCB module and the knob body.

The guiding protrusion may be formed on one surface of the light guide by protruding outward therefrom, and the guiding hole may be formed in the main PCB module.

The guiding protrusion may include a guiding protrusion support part formed on the outer circumferential surface of the light guide by protruding outward therefrom.

The guiding protrusion support part may protrude radially outward, with respect to the shaft passing hole and/or with respect to the knob rotation shaft, from the outer circumferential surface of the light guide, .

The guiding protrusion may include a guiding protrusion part formed on the guiding protrusion support part by extending therefrom to protrude to a side.

The guiding protrusion part may protrude outward along an axial direction or parallel to axial direction, with respect to the shaft passing hole and/or with respect to the knob rotation shaft, from the guiding protrusion support part of the light guide.

Simply put, the guiding protrusion part may protrude towards the main PCB module.

The guiding protrusion part may be configured to have an outer diameter having a shape and/or size corresponding to the shape and/or the size of the inner diameter (i.e. diameter) of the guiding hole.

The guiding protrusion part may be configured to be received into the guiding hole.

The guiding protrusion and the guiding hole is provided with multiple guiding protrusions and multiple guiding holes, respectively.

The guiding protrusion and the guiding hole may respectively include a first guiding protrusion and a first guiding hole formed on the light guide and the main PCB module, respectively, such that the first guiding protrusion (e.g. particularly the guiding protrusion part of the first guiding protrusion) and the first guiding hole correspond to each other, and a second guiding protrusion (e.g. particularly the guiding protrusion part of the second guiding protrusion) and a second guiding hole correspond to each other.

The guiding protrusion part of the first guiding protrusion may be configured to be received into the first guiding hole.

The guiding protrusion part of the first guiding protrusion may have an outer diameter or surface having a shape and/or size corresponding to the shape and/or the size of the inner diameter (i.e. diameter) of the first guiding hole.

The guiding protrusion part of the second guiding protrusion may be configured to be received into the second guiding hole.

The guiding protrusion part of the second guiding protrusion may have an outer diameter or surface having a shape and/or size corresponding to the shape and/or the size of the inner diameter (i.e. diameter) of the second guiding hole.

The first guiding protrusion (e.g. the guiding protrusion part of the first guiding protrusion), the second guiding protrusion (e.g. the guiding protrusion part of the second guiding protrusion), the first hole and the second hole - may be shaped and/or sized and/or dimensioned such that the first guiding protrusion (e.g. the guiding protrusion part of the first guiding protrusion) is selectively receivable or insertable only into the first guiding hole from the first guiding hole and the second guiding hole, and the second guiding protrusion (e.g. the guiding protrusion part of the second guiding protrusion) is selectively receivable or insertable only into the second guiding hole from the first guiding hole and the second guiding hole.

For example, the first guiding protrusion and the first hole may have a shape corresponding to each other - such as a cross-sectional shape e.g. circular, whereas the second guiding protrusion and the second hole may have a shape corresponding to each other - such as a cross-sectional shape e.g. rectangular. The example of circular and rectangular provided herein are not limiting and other different shapes may also be used such as pentagonal, hexagonal, triangular, oval, and so on and so forth.

Simply put, one way of preventing misassembly between the knob and main PCB module is to form the different guiding protrusions in different sizes and to form the corresponding guiding holes in different sizes which correspond to the sizes of the corresponding guiding protrusion.

Another way of preventing misassembly between the knob and main PCB module is to form the different guiding protrusions in different shapes and to form the corresponding guiding holes in different shapes which correspond to the shapes of the corresponding guiding protrusion.

Yet another way of preventing misassembly between the knob and main PCB module is to form the different guiding protrusions in different shapes and different sizes and to form the corresponding guiding holes in different shapes and different sizes which correspond to the shapes and the sizes of the corresponding guiding protrusion.

In short, the shape and/or the size of the first guiding protrusion and the first guiding hole is different from the shape and/or the size of the second guiding protrusion and the second guiding hole.

In other words, the shape and/or the size of the first guiding protrusion and the first guiding hole is formed such that the first guiding protrusion and the first guiding hole selectively mate or engage with each other and the shape and/or the size of the second guiding protrusion and the second guiding hole is formed such that the second guiding protrusion and the second guiding hole selectively mate or engage with each other.

The guiding protrusion and the guiding hole may respectively include a first guiding protrusion and a first guiding hole formed on the light guide and the main PCB module, respectively, such that the first guiding protrusion and the first guiding hole correspond to each other, and a second guiding protrusion and a second guiding hole provided at positions symmetrical to the first guiding protrusion and the first guiding hole, respectively, relative to the centers of the light guide and the main PCB module, respectively.

In other words, the first guiding protrusion and the second guiding protrusion may be formed at radially opposite or radially symmetrical positions, with respect to the shaft passing hole and/or to the knob rotation shaft.

Similarly, the first guiding hole and the second guiding hole may be formed at radially opposite or radially symmetrical positions, with respect to the shaft passing hole and/or to the knob rotation shaft.

The first guiding protrusion and the second guiding protrusion, e.g. particularly the guiding protrusion parts of the first guiding protrusion and the second guiding protrusion, may have different sizes or dimensions, and the first guiding hole and the second guiding hole may have different sizes or dimensions.

The sizes or dimensions of the first guiding protrusion and the first guiding hole may correspond to, or complement, each other such that the first guiding protrusion is receivable (i.e. insertable) into the first guiding hole.

The sizes or dimensions of the second guiding protrusion and the second guiding hole may correspond to, or complement, each other such that the second guiding protrusion is receivable (i.e. insertable) into the second guiding hole.

The sizes or dimensions of the first guiding protrusion and the second guiding hole may be different or non-corresponding or non-complementary to each other such that the first guiding protrusion is not receivable (i.e. not insertable) into the second guiding hole.

Similarly, the sizes or dimensions of the second guiding protrusion and the first guiding hole may be different or non-corresponding or non-complementary to each other such that the second guiding protrusion is not receivable (i.e. not insertable) into the first guiding hole.

Alternatively or additionally, the first guiding protrusion and the second guiding protrusion may have different shapes, and the first guiding hole and the second guiding hole may have different shapes. In such case, the first guiding protrusion and the second guiding protrusion have same or different sizes or dimensions, and the first guiding hole and the second guiding hole may have same or different sizes or dimensions.

The shape of the first guiding protrusion and the first guiding hole may correspond to, or complement, each other such that the first guiding protrusion is receivable (i.e. insertable) into the first guiding hole.

The shape of the second guiding protrusion and the second guiding hole may correspond to, or complement, each other such that the second guiding protrusion is receivable (i.e. insertable) into the second guiding hole.

The shape of the first guiding protrusion and the second guiding hole may be different or non-corresponding or non-complementary to each other such that the first guiding protrusion is not receivable (i.e. not insertable) into the second guiding hole.

Similarly, the shape of the second guiding protrusion and the first guiding hole may be different or non-corresponding or non-complementary to each other such that the second guiding protrusion is not receivable (i.e. not insertable) into the first guiding hole.

The protrusion parts of the first guiding protrusion and the second guiding protrusion may respectively have outer diameters having sizes different from each other, and the inner diameters of the first guiding hole and the second guiding hole may have sizes corresponding to the sizes of the outer diameters of the protrusions parts of the first guiding protrusion and the second guiding protrusion.

The protrusion parts of the first guiding protrusion and the second guiding protrusion may respectively have outer diameters having sizes different from each other, and the inner diameters of the first guiding hole and the second guiding hole may have sizes corresponding to the sizes of the outer diameters of the protrusions parts of the first guiding protrusion and the second guiding protrusion.

In short, the misassembly prevention means may include a plurality of guiding protrusions and a plurality of guiding holes.

The plurality of guiding protrusions may include at least a first and a second guiding protrusions.

The plurality of guiding holes may include at least a first and a second guiding holes.

The first and a second guiding protrusions may be located on the knob or on the main PCB module or may be located one on the knob and another on the main PCB module.

The first and a second guiding holes may be located on the knob or on the main PCB module or may be located one on the knob and another on the main PCB module.

The first guiding protrusion may correspond to the first guiding hole - structurally i.e. may have same/complementary/corresponding shape and/or size (e.g. dimension).

The second guiding protrusion may correspond to the second guiding hole - structurally i.e. may have same/complementary/corresponding shape and/or size (e.g. dimension).

The first guiding protrusion (e.g. the guiding protrusion part of the first guiding protrusion), the second guiding protrusion (e.g. the guiding protrusion part of the second guiding protrusion), the first hole and the second hole - may be shaped and/or sized and/or dimensioned such that the first guiding protrusion (e.g. the guiding protrusion part of the first guiding protrusion) is selectively receivable or insertable only into the first guiding hole from the first guiding hole and the second guiding hole, and the second guiding protrusion (e.g. the guiding protrusion part of the second guiding protrusion) is selectively receivable or insertable only into the second guiding hole from the first guiding hole and the second guiding hole.

The blender may further include: at least one guide coupling protrusion, and at least one PCB coupling hole configured to receive the guide coupling protrusion for coupling the knob to the main PCB module.

One of the at least one guide coupling protrusion and the at least one PCB coupling hole may be provided on the knob, and the other of the at least one guide coupling protrusion and the at least one PCB coupling hole is provided on the main PCB module.

The guide coupling protrusion and the PCB coupling hole may be configured to be coupled to each other by forming a snap-fit coupling.

A length of the guiding protrusion, for example of the guiding protrusion part of the guiding protrusion may be greater than a length of the guide coupling protrusion such that the guiding protrusion, for example of the guiding protrusion part of the guiding protrusion, is received into the guiding hole before the guide coupling protrusion and the PCB coupling hole come into contact with each other or are coupled to each other, when the knob is being coupled to the main PCB module. This ensures that the proper orientation of the knob is achieved before the coupling is completed.

A knob ring may be provided at a side of the light guide.

The knob ring may have a ring shape.

The knob ring may be made of a material through which light emitted by the LED of the main PCB module passes.

A ring-shaped elastic member having a cushioning function may be provided between the light guide and the knob ring.

A guide fastening protrusion and a ring fastening part may be formed on the light guide and the knob ring, respectively, the guide fastening protrusion and the ring fastening part being formed to correspond to each other so as to be coupled to each other, for example by the guide fastening protrusion being received into the ring fastening part.

In other words, a guide fastening protrusion and a ring fastening part (e.g. a ring fastening recess or ring fastening part including a ring fastening recess) may be formed on the light guide and the knob ring, the guide fastening protrusion and the ring fastening part (e.g. the ring fastening recess) being formed to correspond to each other so as to be coupled to each other, for example by the guide fastening protrusion being received into the ring fastening part (e.g. into the ring fastening recess).

One of the guide fastening protrusion and the ring fastening part may be formed on the light guide, and another of the guide fastening protrusion and the ring fastening part may be formed on the knob ring.

For example, the light guide may include a guide fastening protrusion, and the knob ring may include a ring fastening part.

The guide fastening protrusion and the ring fastening part (e.g. the ring fastening recess) may have a shape and/or a size (or dimension) corresponding to and/or complementing each other for being coupled to each other.

The guide fastening protrusion may include a plurality of guide fastening protrusions and the ring fastening part may include a plurality of ring fastening parts.

The plurality of guide fastening protrusions may include at least a first and a second guide fastening protrusions.

The plurality of ring fastening parts may include at least a first and a second ring fastening parts.

The first and a second guide fastening protrusions may be located on the knob ring or on the light guide or may be located one on the knob ring and another on the light guide.

The first and a second guiding holes may be located on the knob ring or on the light guide or may be located one on the knob ring and another on the light guide.

The first guide fastening protrusion may correspond to the first ring fastening part (e.g. to the first ring fastening recess) - structurally i.e. may have same/complementary/corresponding shape and/or size (e.g. dimension).

The second guide fastening protrusion may correspond to the second fastening part (e.g. the second ring fastening recess) - structurally i.e. may have same/complementary/corresponding shape and/or size (e.g. dimension).

The first guide fastening protrusion, the second guide fastening protrusion, the first ring fastening part (e.g. the first ring fastening recess) and the second ring fastening part (e.g. the second ring fastening recess) - may be shaped and/or sized and/or dimensioned such that the first guide fastening protrusion is selectively receivable or insertable into the first ring fastening part only (e.g. into the first ring fastening recess only) from the first and the second ring fastening parts, and the second guide fastening protrusion is selectively receivable or insertable into the second ring fastening part only (e.g. into the second ring fastening recess) from the first and the second ring fastening parts.

For example, the first guide fastening protrusion and the first ring fastening part (e.g. the first ring fastening recess) may have a shape corresponding to each other - such as a cross-sectional shape e.g. circular, whereas the second guide fastening protrusion and the second ring fastening part (e.g. the first ring fastening recess) may have a shape corresponding to each other - such as a cross-sectional shape e.g. rectangular. The example of circular and rectangular provided herein are not limiting and other different shapes may also be used such as pentagonal, hexagonal, triangular, oval, and so on and so forth. The guide fastening protrusion may be formed on the outer circumferential surface of the light guide by protruding outward therefrom, and the ring fastening part may be formed on one surface of the knob ring by protruding to a side therefrom, e.g. towards the guide fastening protrusion.

The guide fastening protrusion may include a protrusion support part formed on the outer circumferential surface of the light guide by protruding outward therefrom, and a guide protrusion part formed on one surface of the protrusion support part by protruding to a side therefrom, e.g. towards the .

The protrusion support part of the guide fastening protrusion may protrude radially outward, with respect to the shaft passing hole and/or with respect to the knob rotation shaft, from the outer circumferential surface of the light guide.

The guide protrusion part of the of the guide fastening protrusion may protrude outward along an axial direction or parallel to axial direction, with respect to the shaft passing hole and/or with respect to the knob rotation shaft, from the protrusion support part of the guide fastening protrusion.

Simply put, the guide protrusion part of the of the guide fastening protrusion may protrude towards the knob ring.

A ring fastening part recess may be formed in the ring fastening part by being recessed inward from an end thereof such that the protrusion support part is received in the ring fastening part recess.

The guide protrusion part may be configured to have a size corresponding to a size of the ring fastening part recess so as to be selectively inserted thereinto.

The guide protrusion part may have a tapered shape so as to have an outer diameter decreasing gradually toward an end thereof.

The end of the guide protrusion part may be configured to have an outer diameter having a size smaller than a size of an inner diameter of the ring fastening part recess, and the outer diameter of the root end of the guide protrusion part may have a size equal to or larger than the size of the inner diameter of the ring fastening part recess.

In the present disclosure - 'rear', 'rearward', `rear side', `rear end' and like phrases and 'front', 'forward' 'front side', 'front end' and like phrases - may be understood with respect to a direction from the knob to the main PCB module, wherein the knob is at a front/forward side and the main PCB module is at the rear/back side.

Thus, according to the blender of the present disclosure misassembly between the knob and the main PCB module may be prevented.

This may be achieved by aligned-coupling or oriented-coupling of the knob to the main PCB module. This may be achieved for example by the selective coupling between the guiding protrusion and the guiding hole. This may also be achieved or the effect may be enhanced/improved by the selective coupling between the guide fastening protrusion and the ring fastening part.

The blender of the present disclosure may have the following effects.

First, in the blender of the present disclosure, the misassembly prevention means for assembling the knob of the main body may be provided. Accordingly, the knob assembled with the main PCB module may be assembled at precise positions thereof in up and down, and left and right directions, thereby preventing the misassembly of the knob.

Second, in the blender of the present disclosure, the misassembly prevention means may be composed of the guiding protrusion and the guiding hole, wherein the guiding protrusion may have a tapered shape, and the outer diameter of an end thereof may be smaller than the inner diameter of the guiding hole, and the inner end (a root end) of the guiding protrusion may be configured to have a size equal to or larger than the size of the guiding hole, so the guiding protrusion and the guiding hole may be coupled to each other by forcible fitting. Accordingly, the assembly of the knob may be easy and without a separate member, the coupling of the knob with the main PCB module may be securely performed.

Third, the misassembly prevention means of the present disclosure may be composed of a pair of guiding protrusion and guiding hole having sizes corresponding to each other, and such a pair of guiding protrusion and guiding hole may be formed at positions corresponding to each other. Accordingly, among the multiple guiding protrusions and the multiple guiding holes, only the guiding protrusion and the guiding hole corresponding to each other may be coupled to each other, thereby enabling the light guide to be installed on the precise position of the main PCB module in a vertical direction.

Fourth, in the blender of the present disclosure, the guide fastening protrusion and the ring fastening part may be formed respectively on the light guide and the knob ring constituting the knob such that the guide fastening protrusion and the ring fastening part correspond to each other to be coupled to each other, wherein the guide fastening protrusion may be configured to have a tapered shape and may be coupled to the ring fastening part recess. Accordingly, the efficiency of the assembly of the light guide with the knob ring may be improved.

Fifth, in the blender of the present disclosure, the support means supporting the touch module may be provided under a touch manipulation part of the main body. Accordingly, during the manipulation of the touch manipulation part, the movement of the touch module may be prevented, thereby improving the precision of touch manipulation and preventing manipulation error.

Sixth, in the blender of the present disclosure, the touch manipulation part provided on the upper surface of a main body casing of the main body, the touch module provided under the touch manipulation part, and the support means provided in the heat dissipation frame may be in close contact with each other to be fixed. Accordingly, during touch manipulation by a user, the vertical movement of the touch manipulation part may be prevented, thereby improving touch feeling.

Seventh, in the blender of the present disclosure, air introduced into the main body may be discharged to a side under the main body. Accordingly, air used for dissipating heat of electronic parts while passing through the inside of the main body may be prevented from coming into direct contact with a user, thereby preventing a user's complaint.

### BRIEF DESCRIPTION OF THE DRAWINGS

The above and other objectives, features, and other advantages of the present disclosure will be more clearly understood from the following detailed description when taken in conjunction with the accompanying drawings, in which:
FIG. 1 is a perspective view illustrating the configuration of the blender of the present disclosure according to an exemplary embodiment;
FIG. 2 is a vertical sectional view illustrating the internal configuration of the blender of the present disclosure;
FIG. 3 is an exploded perspective view illustrating the detailed configuration of a container body constituting the blender of the present disclosure according to the embodiment;
FIG. 4 is a bottom perspective view of the container body constituting the blender of the present disclosure according to the embodiment;
FIG. 5 is a perspective view of the main body constituting the blender of the present disclosure according to the embodiment;
FIG. 6 is an exploded perspective view illustrating the configuration of the upper half part of the main body constituting the blender of the present disclosure according to the embodiment;
FIG. 7 is a perspective view illustrating a state in which a cover is removed from the main body constituting the blender of the present disclosure according to the embodiment;
FIG. 8 is an exploded perspective view illustrating the configuration of a main body casing constituting the blender according to the embodiment of the present disclosure;
FIG. 9 is a front sectional view illustrating the internal configuration of the main body constituting the blender according to the embodiment of the present disclosure.
FIG. 10 is a cutaway perspective view illustrating a state in which the right side of the main body constituting the blender according to the embodiment of the present disclosure is partially cut;
FIG. 11 is a cutaway perspective view illustrated by cutting a portion of the main body constituting the blender according to the embodiment of the present disclosure;
FIG. 12 is a partial perspective view illustrating the installed state of a touch module constituting the blender according to the embodiment of the present disclosure;
FIG. 13 is an exploded partial perspective view illustrating the installed state of the touch module constituting the blender according to the embodiment of the present disclosure;
FIG. 14 is a bottom perspective view illustrating the internal configuration of the main body constituting the blender according to the embodiment of the present disclosure; and
FIG. 15 is a bottom perspective view of the inside of the main body illustrating a state in which an inverter PCB module and a heat dissipation member are removed from the main body of FIG. 14;
FIG. 16 is a perspective view illustrating a state in which a knob constituting the blender is coupled to a main PCB module and a main bracket according to the embodiment of the present disclosure;
FIG. 17 is a front exploded perspective view of FIG. 16;
FIG. 18 is a rear exploded perspective view of FIG. 16;
FIG. 19 is a perspective view illustrating the detailed configuration of the main PCB module constituting the blender according to the embodiment of the present disclosure;
FIG. 20 is a perspective view illustrating the configuration of a light guide of the knob constituting the blender according to the embodiment of the present disclosure;
FIG. 21 is a rear perspective view illustrating the configuration of the light guide of the knob constituting the blender according to the embodiment of the present disclosure;
FIG. 22 is a front view illustrating a state in which the light guide of the knob constituting the blender is fastened to the main PCB module according to the embodiment of the present disclosure; and
FIG. 23 is a rear view illustrating the state in which the light guide of the knob constituting the blender is fastened to the main PCB module according to the embodiment of the present disclosure.

### DETAILED DESCRIPTION OF THE INVENTION

Hereinafter, a blender of the present disclosure will be described in detail with reference to the accompanying drawings.

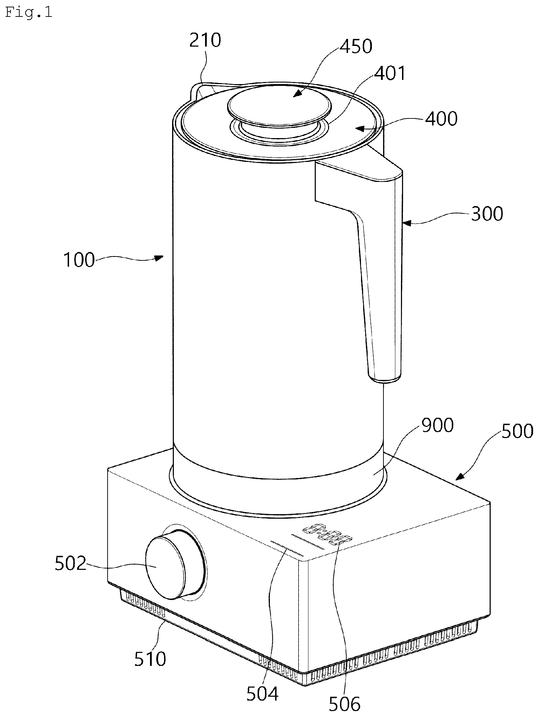

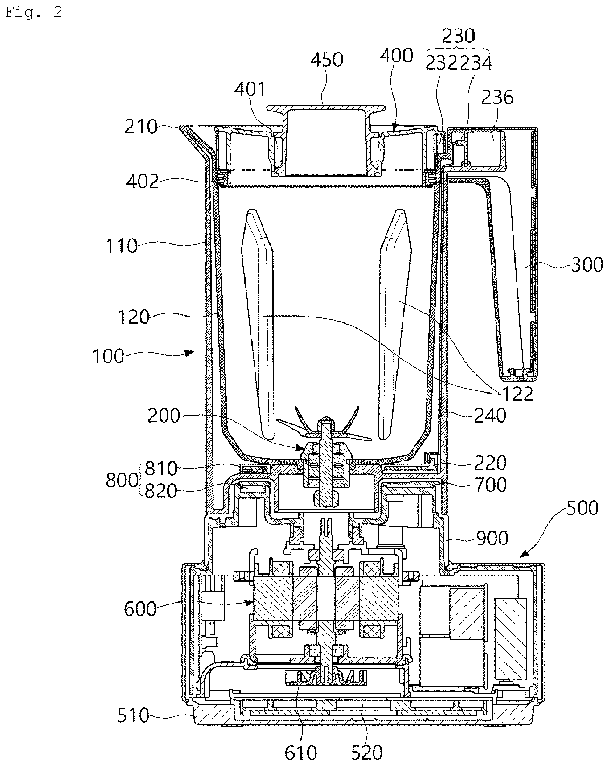

FIGS. 1 and 2 illustrate a perspective view and a vertical sectional view, respectively, showing the configuration of the blender according to an embodiment of the present disclosure.

As illustrated in these drawings, the blender of the present disclosure may include a container body 100 located at an upper side thereof so as to receive food, and a main body 500 provided at the lower side of the container body 100 so as to support the container body 100.

The container body 100 may be a part in which food is received and the process of cutting or crushing the food occurs, and the main body 500 may support the container body 100. Furthermore, multiple parts may be provided inside such a main body 500 to control the cutting or crushing of the food received in the container body 100, or to supply electric power.

The container body 100 may have a cylindrical shape as a whole, and an upper surface thereof may be configured to be open to introduce food thereinto.

The container body 100 may be made of a transparent material such that the inside thereof can be seen from the outside. That is, the container body 100 may be made of glass or transparent plastic such that a user can check the state of food contained inside the container body 100 from the outside.

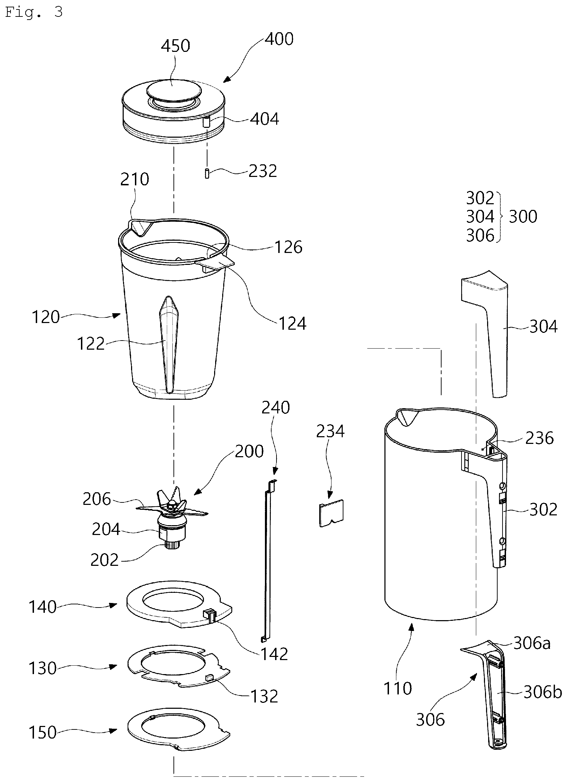

A blade assembly 200 may be provided in the inner lower part of the container body 100. The blade assembly 200 may have multiple blades (206 of FIG. 3) mounted rotatably thereto such that the blades chop or crush food received in the container body 100.

The blade assembly 200 may be connected to a motor assembly 600 to be described below, and be configured to be rotated by a rotational force generated by the motor assembly 600.

The container body 100 may be configured to have a double structure. That is, the container body 100 may be composed of an outer container body 110 constituting appearance thereof and an inner container body 120 provided inside the outer container body 110. The outer container body 110 and the inner container body 120 may be configured to be in contact with each other or to be spaced apart by a predetermined distance from each other. Furthermore, only a portion of each of the outer container body 110 and the inner container body 120 may be configured to be in contact with each other.

At least one inner guide 122 may be provided in the container body 100 to have a predetermined length in a vertical direction. The inner guides 122 are intended to guide food rotating in the container body 100, and may be configured in pairs symmetrical to each other in the front and rear or left and right of the inner container body 120.

A handle 300 gripped by a user may be formed on the right surface of the container body 100 by protruding therefrom to the right side. Such a handle 300 may be configured such that a user can grip the handle with his or her one hand, and in the present disclosure, the upper end of the handle is illustrated to be connected integrally to the upper surface of the container body 100.

Meanwhile, a spout 210 may be formed at a side opposite to the handle 300.

As illustrated in FIG. 2, the spout 210 may be formed on the upper end of the left surface of the container body 100, and may be a part through which food completely crushed in the container body 100 is guided to be easily poured to the outside. Accordingly, such a spout 210 may be configured to protrude upward more gradually in the left direction.

The upper surface of the container body 100 may be covered by a container lid 400. That is, the container lid 400 may be detachably mounted to the upper surface of the container body 100, and open and close the upper surface of the container body 100.

The container lid 400 may cover the upper surface of the container body 100 such that food contained in the container body 100 is not removed to the outside and foreign matter of the outside is not introduced into the container body 100.

The container lid 400 may be configured to be mounted to the container body 100 by pressing or rotating the container lid 400 by a user. A gasket 402 may be provided in the outer circumferential surface of the container lid 400 and block a gap between the container lid 400 and the container body 100. Of course, such a gasket 402 may function to allow the container lid 400 to be pressed and fitted to the container body 100.

A cap 450 may be provided in the container lid 400. That is, a lid hole 401 which is a circular hole having a predetermined size may be formed vertically through the center of the container lid 400, and the cap 450 may be mounted to such a lid hole 401 to cover the lid hole 401.

As illustrated in FIG. 2, the cap 450 may be installed at the center of the container lid 400, and as a whole, may be configured to have a diameter smaller than the diameter of the container lid 400. The cap 450 may be removably mounted to the container lid 400 by forcible fitting by pressing or by rotating.

In the present disclosure, it is illustrated that the cap 450 is configured to be attached to and detached from the container lid 400 by being rotated, and a detailed configuration thereof will be described below.

Since the cap 450 may be removably mounted to the container lid 400, a user may see food contained inside the container body 100 by opening only the cap 450 without opening the container lid 400, and insert food into the container body 100 by opening the cap 450, or insert a mixing rod thereinto and stir the food contained inside the container body 100.

The upper end of the cap 450 may be formed by protruding toward a side upper than the upper end of the container lid 400, so the cap 450 may function as the handle of the container lid 400 gripped by a user when the user opens or closes the container lid 400.

As illustrated in the drawings, the main body 500 may be configured to have a hexahedral shape having the shape of a rectangular barrel as a whole and be provided under the container body 100 so as to support the container body 100, wherein the motor assembly 600 and multiple electronic parts such as a PCB (a printed circuit board) may be mounted inside the main body 500. Of course, the external shape of such a main body 500 may be variously changed as required.

The motor assembly 600 may be provided at the center of the inside of the main body 500. The motor assembly 600 may generate a rotational force by power supplied from the outside such that the blades (206 of FIG. 3) constituting the blade assembly 200 rotate.

Accordingly, the lower end of the blade assembly 200 may be connected to the upper end of the motor assembly 600.

A knob 502 may be provided on the front surface of the main body 500 by protruding forward therefrom. The knob 502 is intended to preset the operation of the blender of the present disclosure, and may be rotatably mounted to the main body 500.

The knob 502 may be configured to control the intensity of the operation of the motor assembly 600. That is, the knob 502 may be configured to change the rotational speed of the motor assembly 600 to high speed or low speed by the clockwise or counterclockwise rotation of the knob 502.

Meanwhile, a touch manipulation part 504 may be provided on the upper surface of the main body 500.

The touch manipulation part 504 is intended to manipulate the blender of the present disclosure by touching, and may be configured to manipulate the starting and stopping of the blender.

Of course, the knob 502 and the touch manipulation part 504 may be configured to selectively preset or manipulate the operation of the blender, or may be configured to overlap each other in the functions of the presetting and manipulating. That is, for convenience, the knob 502 and the touch manipulation part 504 may be configured to have functions overlapping each other such that a user may select any one of the knob 502 and the touch manipulation part 504 to preset or manipulate the operation of the blender.

A display part 506 may be provided at a side of the touch manipulation part 504 (a left side of FIG. 1). That is, the display part 506 may be provided on the upper surface of the main body 500. Such a display part 506 may function to display the state of the operation of the blender such that a user can check the state thereof. Accordingly, such a display part 506 may be configured as a seven-segment display.

A cooling fan 610 may be provided at the lower side of the motor assembly 600.

The cooling fan 610 may be connected to the lower end of the motor assembly 600 and be rotated by a rotating force generated by the motor assembly 600, thereby introducing external air into the main body 500 and forcing the air to be discharged back to the outside. Accordingly, the cooling fan 610 may allow external air to be introduced into the main body 500 and then be discharged to the outside, and thus function to cool parts such as the PCB provided inside the main body 500.

A base end 510 may be provided on the lower surface of the main body 500.

The base end 510 may be formed by protruding downward from the lower surface of the main body 500 and may have a space having a predetermined size therein to receive a wireless power module 520. The wireless power module 520 may function to receive external wireless power in a wireless method using induced electromotive force and to supply the wireless power to the motor assembly 600 provided inside the main body 500.

Meanwhile, a detection system may be provided in the main body 500 and the container body 100 described above so as to detect whether the container lid 400 is mounted to the container body 100.

The detection system may allow an electric circuit (not shown) which can be turned on and off to be formed in the container body 100, and allow such an electric circuit to form a closed circuit, so that the detection system may be configured to detect whether electric current flows in the closed circuit by voltage supplied by the main body 500.

More specifically, the detection system may include: a power transmission means 700 provided in the main body 500 and configured to supply power to the container body 100; a power reception means 220 provided in the container body 100 and configured to receive the power supplied by the power transmission means 700; an on/off means 230 provided at the upper side of the container body 100 and configured to turn on/off the electric circuit formed in the container body 100 depending on whether the container lid 400 is closed; a transparent electrode film 240 made of a transparent material provided on a surface of the container body 100 and connecting the power reception means 220 and the on/off means 230 to each other so as to allow electricity to flow therebetween; and a detection means 800 provided on one side of the main body 500 or the container body 100 and allowing the electric circuit formed by the connection of the power reception means 220 with the on/off means 230 to form a closed circuit so as to detect whether electric current flows.

The power transmission means 700 is intended to transmit power, which is introduced into the main body 500 from the outside of the main body 500 or is prestored in the main body 500, to the container body 100, and may use an induction coil in which induced electromotive force can be generated.

The power reception means 220 is intended to receive the power transmitted from the main body 500, and may be configured to have a structure corresponding to the structure of the power transmission means 700. That is, the power reception means 220 may use a coil such that power is transmitted thereto by induced electromotive force generated between the power transmission means 700 and the power reception means 220.

The power transmission means 700 and the power reception means 220 may be located to be adj acent to each other so as to generate induced electromotive force. Accordingly, in the present disclosure, the power transmission means 700 is mounted to the right upper end of the main body 500, and the power reception means 220 is mounted to the right lower end of the container body 100.

The on/off means 230 may be configured to turn on/off the electric circuit (not shown) formed in the container body 100 depending on whether the container lid 400 is mounted to the container body 100, and may include a permanent magnet 232 and a reed switch 234 provided respectively in the container lid 400 and the container body 100.

As illustrated in FIG. 2, in the present disclosure, the permanent magnet 232 is mounted to the right edge of the container lid 400, and the reed switch 234 is mounted to the right upper end (a portion of the handle) of the container body 100.

More specifically, the reed switch 234 may be installed to be received in a reed switch groove 236 formed in the upper end portion of the handle 300.

It is widely known that the reed switch has magnetic movable contacts enclosed in a glass tube, and when a magnet approaches the reed switch, the contacts in the glass tube contact with each other. Here, the further detailed description of the configuration and principle of the reed switch will be omitted.

Of course, except for the use of the permanent magnet 232 and the reed switch 234 as such an on/off means 230, other electric on/off means or mechanical structures may be used to turn on/off the electric circuit, and the installation positions of the permanent magnet 232 and the reed switch 234 mounted respectively to the container lid 400 and the container body 100 may be reversed.

Various types of electrical devices or structures having a function that can detect whether electric current flows in the electric circuit formed in the container body 100 turned on/off by the on/off means 230 may be used as the detection means 800. However, in the present disclosure, a photosensor is used to detect light as an example.

Accordingly, the detection means 800 may include a light transmission module 810 provided in the container body 100 to generate light, and a light reception module 820 provided in the main body 500 to receive the light transmitted by the light transmission module 810.

The light transmission module 810 and the light reception module 820 may be located at positions adjacent to each other. In the present disclosure, as illustrated in FIG. 2, the light transmission module 810 may be located on the left lower end of the container body 100, and the light reception module 820 may be located on the left upper end of the main body 500.

The light transmission module 810 may use an LED that emits light by electricity, and the light reception module 820 may use the photosensor that receives light and converts the light into an electrical signal.

Furthermore, the transparent electrode film 240 may be provided between the outer container body 110 and the inner container body 120. More specifically, the transparent electrode film 240 may be attached to the inner surface of the outer container body 110.

The transparent electrode film 240 may be made of a transparent material such as an ITO film (an indium-tin oxide film) and may be attached to the surface of the container body 100, and may allow the on/off means 230 provided on the upper side of the container body 100 to be connected to the power reception means 220 and the light transmission module 810 provided on the lower end portion of the container body 100 so as to form an electric circuit.

Accordingly, the transparent electrode film 240 may be attached vertically and longitudinally to the surface of the container body 100 made of a transparent material and may function to guide the transmission of an electrical signal between the upper and lower ends of the container body 100.

Accordingly, when the container body 100 is made of a transparent material, and the transparent electrode film 240 is also made of a transparent material, the transparent electrode film 240 may not be visually exposed, so the appearance of the container body 100 may not be damaged to maintain the design thereof.

In addition, when the transparent electrode film 240 is attached to the surface of the container body 100, the transparent electrode film 240 may have a hole formed therein to remove air bubbles that may be generated between attached surfaces. That is, a perforated hole may be added to the center of the transparent electrode film 240 made of the ITO film to allow the air bubbles to escape therethrough such that the generation of the air bubbles is prevented.

Meanwhile, a seating step 900 may be formed on the upper surface of the main body 500 by protruding upward therefrom.

The seating step 900 may be configured to have a circular shape corresponding to the shape of the lower end of the container body 100, so that the lower end of the container body 100 may be mounted to the seating step 900 to be vertically removed therefrom.

Furthermore, the container body 100 may be configured as a double structure. That is, the container body 100 may be composed of the outer container body 110 and the inner container body 120, and the inner guides 122 may be formed on the inner surface of the inner container body 120 by protruding inward therefrom.

Hereinafter, the configuration of the container body 100 will be described in detail.

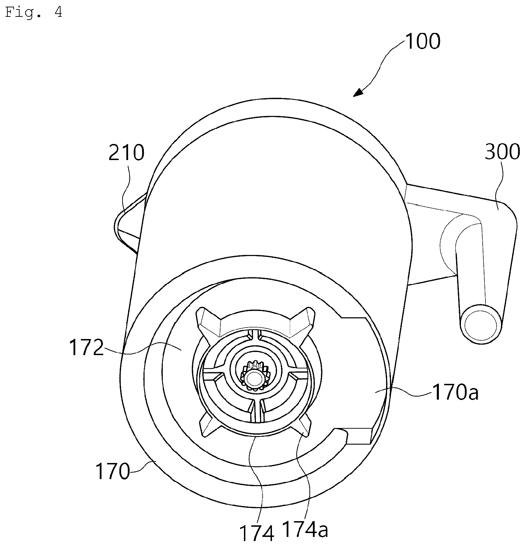

FIG. 3 illustrates an exploded perspective view of the container body 100, and FIG. 4 illustrates a bottom perspective view of the container body 100.

As illustrated in these drawings, the container body 100 may be configured as a double structure having a cylindrical shape as a whole. That is, the container body 100 may include the outer container body 110 constituting an appearance thereof, and the inner container body 120 provided inside the outer container body 110.

The container body 100, that is, each of the outer container body 110 and the inner container body 120 may be made of a transparent material. That is, the container body 100 may be made of a transparent material such as glass, Tritan, or transparent plastic such that a user can check the state of food contained inside the container body 100 from the outside.

The outer container body 110 may constitute the appearance of the container body, and be configured to have a cylindrical shape with the same top and bottom sizes, and a main handle 302 may be formed on the outer right surface of the outer container body 110 by protruding therefrom to the right such that a user can grip the main handle.

The main handle 302 may be formed to have an L shape, and an upper end portion thereof may be connected to the right upper end of the outer container body 110. The main handle 302 may be formed integrally with the outer container body 110 by injection molding. Accordingly, the main handle 302 formed integrally with the outer container body 110 may have improved strength and durability compared to a main handle formed as a part separate from the outer container body 110 to be fixed thereto.

The reed switch groove 236 receiving the reed switch 234 may be formed at a portion at which the main handle 302 is connected to the container body 100. That is, the reed switch groove 236 may be formed in the upper end of the main handle 302, and may provide space to mount the reed switch 234 therein, and the left of such a reed switch groove 236 may be open.

An outer handle 304 and an inner handle 306 may be provided respectively on the outer and inner sides of the main handle 302. That is, as illustrated in FIG. 3, the outer handle 304 may be provided at the right of the main handle 302, and the inner handle 306 may be provided at the left of the main handle 302.

More specifically, the outer handle 304 may also be configured to have an L shape as a whole as does the main handle 302, and to cover the upper surface, right surface, and front and rear surfaces of the main handle 302. The outer handle 304 may be made of a material such as stainless steel that has a smooth surface and is resistant to rust, and may not break easily and look beautiful to a user.

The inner handle 306 may cover the left surface and lower surface of the main handle 302, and may be configured to have an L shape corresponding to the shape of the left and lower surfaces of the main handle 302, and at least a portion of the inner handle may be made of an elastic material.

Specifically, the inner handle 306 may include a connection part 306a covering the lower part of the upper end of the main handle 302, and a gripping part 306b extending downward from the connection part 306a and covering the left surface of the main handle 302.

Like the outer handle 304, the connection part 306a may be made of a smooth and strong material, and the gripping part 306b may be a part covered by a user's fingers, and be made of an elastic material. That is, the connection part 306a may be made of stainless steel, and the gripping part 306b may be made of an elastic material such as rubber that can give a user a soft touch since the four fingers (except for the thumb) of the user cover the gripping part.

The inner container body 120 may be configured to have size (a diameter) smaller than the size (a diameter) of the outer container body 110 and may be seated inside the outer container body 110.

The inner container body 120 may be configured to have a cylindrical shape having an open upper part. More specifically, as illustrated in FIG. 3, the inner container body 120 may be configured to have a tapered shape having a diameter gradually decreasing toward the lower side thereof.

Furthermore, as described above, the multiple inner guides 122 may be vertically formed on the inner surface of such an inner container body 120, and the blade assembly 200 may be mounted to the lower end of the inner container body 120.

The spout 210 may be formed on the left upper end of the inner container body 120 by protruding therefrom to the left, and a covering end 124 may be formed on the right upper end of the inner container body 120 by extending therefrom to the right.

The covering end 124 may cover the upper surface of the reed switch groove 236 of the outer container body 110. The covering end 124 may be configured as a flat plate having a predetermined thickness and to have width gradually decreasing toward the right to correspond to the size of the upper end of the reed switch groove 236.

The blade assembly 200 may be mounted to the lower end of the inner container body 120.

The blade assembly 200 may allow food to be finely crushed or mixed by the blades, and may include: a blade shaft 202 rotated by receiving rotational power from the motor assembly 600; a blade body 204 provided at the outer side of the blade shaft 202 and supporting the blade shaft 202; and at least one blade 206 rotated by being connected to the blade shaft 202 so as to crush food.

A magnet holder 404 may be provided on the outer circumferential surface of the container lid 400. That is, as illustrated in FIG. 3, the magnet holder 404 may be formed on the outer circumferential surface of the container lid 400 by protruding therefrom to the outside, wherein the permanent magnet 232 may be mounted in the magnet holder 404.

The permanent magnet 232 may be intended to control the turning on/off of the reed switch 234 when the container lid 400 is mounted to or removed from the container body 100.

A coil holder assembly may be provided between the outer container body 110 and the inner container body 120.

The coil holder assembly may include a coil holder 130 having an induction coil, and an upper cover 140 and a lower cover 150 covering the upper and lower sides of the coil holder 130, respectively.

Specifically, the coil holder 130 may be provided between the bottom surface of the outer container body 110 and the lower surface of the inner container body 120, and the power reception means 220 and the light transmission module 810 may be mounted to such a coil holder 130.

The entirety of the coil holder 130 may have the shape of a circular ring having a predetermined thickness, and the power reception means 220 may be provided at the right end of the coil holder 130 having such a ring shape. That is, although not shown in detail, an induction coil which receives power may be provided at the right end of the coil holder 130, and constitute the power reception means 220.

The power reception means 220 mounted to the coil holder 130 may be embodied with a reception induction coil patterned on the same plane as the PCB. That is, in the power reception means 220 according to the embodiment of the present disclosure, the reception induction coil provided on the lower surface of the coil holder 130 may be configured to be wound multiple times on the PCB in a spiral shape relative to a reception center point.

In addition, the light transmission module 810 may be provided on the lower surface of the coil holder 130.

The light transmission module 810 may emit light by power supplied from the power reception means 220. The light transmission module 810 may be configured as a part of the detection means 800, and use the LED emitting light as described above.

The power reception means 220 and the light transmission module 810 may be electrically connected to each other. That is, the power reception means 220 and the light transmission module 810 may be configured to form a closed circuit in cooperation with the on/off means 230. Accordingly, the power reception means 220 and the light transmission module 810 provided in the coil holder 130, and the on/off means 230 may be configured to be electrically connected to each other by the PCB.

Furthermore, although not shown, the coil holder 130 may further include a conversion module that converts an alternating current (AC) to a direct current (DC).

A holder terminal 132 may be provided on the upper surface of the right end of the coil holder 130.

The holder terminal 132 may be a part to which the lower end of the transparent electrode film 240 is inserted and connected.

As illustrated in FIG. 3, the coil holder 130 may be configured to have an approximate ring shape as a whole, and the right end of the coil holder 130 may be configured to have a relatively large width such that the power reception means 220 can be mounted thereto.

Multiple grooves may be formed in the outer and inner circumferential surfaces of the coil holder 130 such that hooks for fixing multiple parts pass through the multiple grooves.

The coil holder 130 may be protected by the upper and lower covers 140 and 150. That is, the upper cover 140 and the lower cover 150 may be provided on the upper surface and lower surface of the coil holder 130, respectively, so as to cover the upper surface and lower surface thereof, the upper cover and lower cover having shapes corresponding to the upper surface and lower surface of the coil holder 130, respectively.

A terminal holder 142 may be formed on the right end of the upper cover 140 by protruding upward therefrom to receive the holder terminal 132 of the coil holder 130 therein. Accordingly, the holder terminal 132 may be received in the terminal holder 142 by being introduced thereto from the lower side of the terminal holder 142, and the upper part of such a terminal holder 142 may be configured to be partially open such that the lower end of the transparent electrode film 240 passes therethrough.

A hook may be formed on the upper cover 140 such that the upper cover 140 is coupled to the lower cover 150.

As described above, the transparent electrode film 240 may be made of a transparent material such as the ITO film, and may be configured to have length corresponding to the vertical length of the container body 100.

The transparent electrode film 240 may be provided between the outer container body 110 and the inner container body 120. Accordingly, when the transparent electrode film 240 is provided between the outer container body 110 and the inner container body 120, the transparent electrode film 240 may be prevented from being in contact with food contained in the inner container body 120, and may be prevented from being in contact with foreign matter outside of the outer container body 110.

The transparent electrode film 240 may be attached to the surface of the outer container body 110, or the surface of the inner container body 120. That is, the transparent electrode film 240 may be attached to the inner surface of the outer container body 110 or the outer surface (an outer circumferential surface) of the inner container body 120.

Here, the transparent electrode film 240 attached vertically to the inner surface of the outer container body 110 will be described as an example.

As is illustrated in FIG. 3, each of the upper and lower ends of the transparent electrode film 240 may be bent at least one time. The lower end of the transparent electrode film 240 may pass through the terminal holder 142 of the upper cover 140 and be connected to the holder terminal 132 of the coil holder 130, and the upper end of the transparent electrode film 240 may be connected to the reed switch 234.

A film guide 160 to which the transparent electrode film 240 is attached may be formed vertically on the inner surface of the outer container body 110. That is, the film guide 160 may be formed vertically and longitudinally on the right inner surface of the outer container body 110 and may guide the attachment of the transparent electrode film 240.

A magnet groove 126 may be formed in the upper end of the inner container body 120 by being recessed therefrom to the outside such that the permanent magnet 232 is received in the magnet groove 126. That is, the upper end of the right surface of the inner container body 120 may be bent to be stepped to the right so as to form the magnet groove 126, and such a magnet groove 126 may be a part in which the permanent magnet 232 is located.

Meanwhile, the lower surface of the container body 100 may be configured to have a shape corresponding to the shape of the upper surface of the main body 500 such that the container body 100 is easily attached to and detached from the upper surface of the main body 500.

More specifically, the container body 100 may be mounted to the seating step 900 of the main body 500 to be described below.

Accordingly, the lower surface of the container body 100 may be configured to have a shape corresponding to the shape of the upper end of the main body 500, so the container body 100 may be stably mounted to and easily removed from the main body 500.

A container body end 170 having a predetermined width may be formed on the lower surface of the container body 100 by protruding downward therefrom. The container body end 170 may be a part which is in contact with the upper surface of a lower step 910 of the main body 500 to be described below, and may be configured to have a shape corresponding to the upper surface of the lower step 910.

An upper step receiving groove 172 may be formed in the center of the lower surface of the container body 100 by being recessed upward therefrom. That is, the upper step receiving groove 172 may be formed by being recessed upward at the inner side of the container body end 170 of the container body 100. When the container body 100 is mounted to the main body 500, an upper step 920 of the main body 500 to be described below may be received in such an upper step receiving groove 172.

The container body end 170 may have the shape of a circular ring having a partially open part, and the open part may be a part in which a coil seating part 940 to be described below is received. That is, the right end of the container body end 170 may be open to form a coil seating part groove 170a. The coil seating part 940 to be described below may be received in such a coil seating part groove 170a.

A circular end 174 may be formed on the center of the lower surface of the container body 100 by protruding downward therefrom. That is, the circular end 174 protruding downward may be provided in the center of the upper step receiving groove 172.

As illustrated in FIG. 4, the circular end 174 may have the shape of a circular ring and be hollow therein, and may provide a passage connecting the blade assembly 200 to the motor assembly 600.

The circular end 174 may be a part received in a circular end receiving groove 980 formed in the main body 500 to be described below.

Multiple mounting protrusions 174a may be formed on the outer circumferential surface of the circular end 174 by protruding radially therefrom. Each of the mounting protrusions 174a may function to tightly mount the container body 100 to the corresponding position of the main body 500 such that the container body 100 is held without being rotated. The mounting protrusion 174a may include at least one mounting protrusion.

In the present disclosure, the mounting protrusion 174a is illustrated to have four mounting protrusions 174a. As illustrated in FIG. 4, such a mounting protrusion 174a may be formed to have thickness gradually decreasing toward the outside. This is intended to easily receive the mounting protrusions 174a in protrusion grooves 982 to be described below.

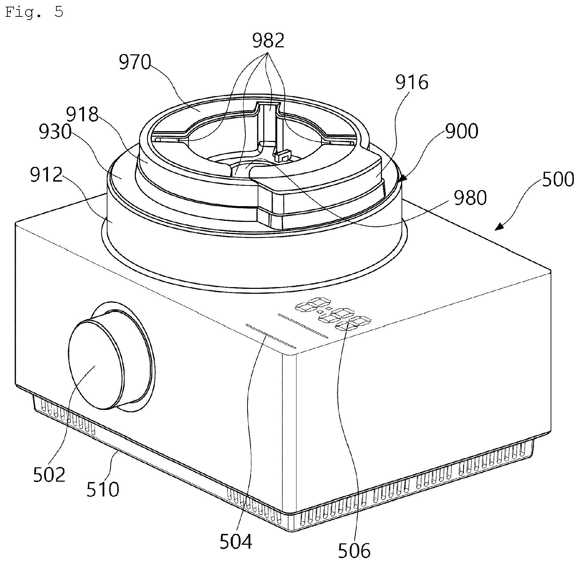

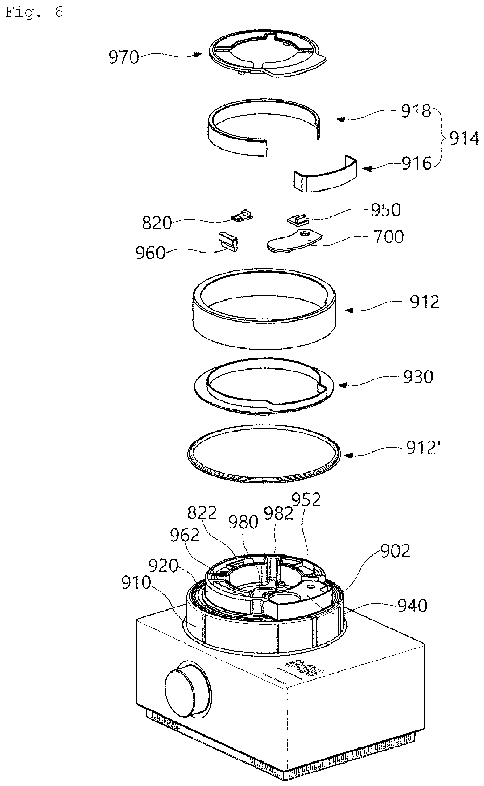

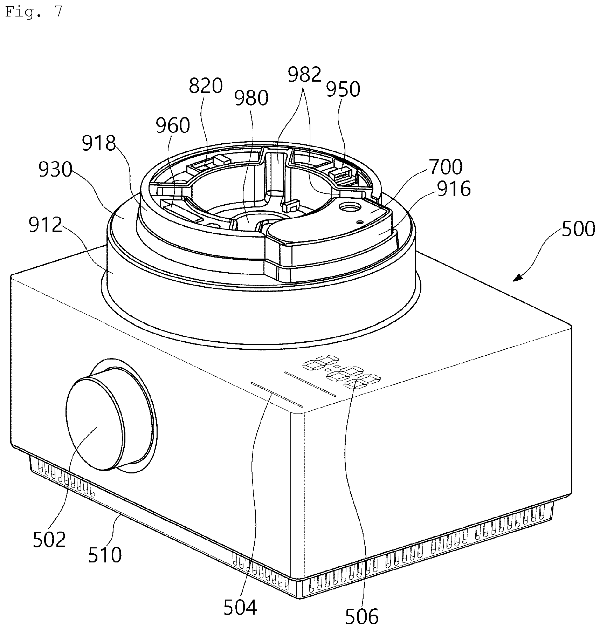

In FIGS. 5 to 7, the configuration of the upper half part of the main body 500 is illustrated in detail. That is, FIG. 5 illustrates a perspective view of the main body 500; FIG. 6 illustrates an exploded perspective view illustrating the configuration of the upper half part of the main body 500; and FIG. 7 illustrates a perspective view of the configuration of the main body 500 from which the cover is removed.

As illustrated in these drawings, the seating step 900 may be provided on the upper surface of the main body 500 by protruding therefrom to be stepped upward such that the lower surface of the container body 100 is seated thereon.

The seating step 900 may be a part by which the lower end of the container body 100 is seated and be supported. Accordingly, such a seating step 900 may be configured to have a shape corresponding to the shape of the lower part of the container body 100.

Specifically, the seating step 900 may be formed by being stepped, and may include the lower step 910 having a diameter corresponding to the diameter of the lower end of the container body 100, and the upper step 920 formed by protruding upward from the lower step 910 and having a diameter smaller than the diameter of the lower step 910.

As illustrated in FIG. 6, the lower step 910 may be configured to have a circular shape and a predetermined height, and the upper step 920 having a diameter smaller than the diameter of the lower step 910 may be formed on the upper part of such a lower step 910 by protruding upward therefrom to have a predetermined height. Accordingly, a step surface 902 horizontal like the upper surface of the main body 500 may be formed between the lower step 910 having the larger diameter and the upper step 920 having the smaller diameter.

A lower step ring 912 and an upper step ring 914 having shapes corresponding to the outer surfaces of the lower step 910 and the upper step 920, respectively, may be provided on the outer surfaces of the lower step 910 and the upper step 920, respectively. That is, the lower step ring 912 and the upper step ring 914 may be provided on the outer circumferential surfaces of the lower step 910 and the upper step 920, respectively, which have the outer surfaces of circular shapes, and may respectively cover the outer surfaces (side surfaces) of the lower step 910 and the upper step 920.

The lower step ring 912 and the upper step ring 914 may be made of metal and may protect parts thereinside, and may function as exterior materials. Accordingly, like the outer handle 304, the lower step ring 912 and the upper step ring 914 may be made of a material such as stainless steel which has a smooth surface and is resistant to rust.

In addition, an elastic member 930 made of an elastic material may be provided on the step surface 902 provided between the upper step 920 and the lower step 910. As illustrated in FIG. 5, the elastic member 930 may be configured to cover the step surface 902 formed on the upper surface of the lower step 910, and to cover the lower half part of the upper step 920.

The elastic member 930 may be made of an elastic material, and thus may function to buffer impact which may be generated when the container body 100 sits on the main body 500. That is, when the lower surface of the container body 100 sitting on the upper step 920 is in contact with the upper step 920, the elastic member 930 may function to prevent breakage or noise that may occur due to the collision of the lower surface of the container body 100 with the upper step 920 and the lower step 910 of the main body 500, which are made of solid materials.

Accordingly, the elastic member 930 may be made of a material such as rubber, and may function to make the seating of the container body 100 efficient. Further, the elastic member 930 may be made of a conductive rubber when required, and in this case, a conductive rubber may be provided even on the lower surface of the container body 100.

The power transmission means 700 and the light reception module 820 may be mounted to the upper surface of the upper step 920.

Specifically, the coil seating part 940 may be formed on the right surface of the upper step 920 by protruding therefrom to the right, and the power transmission means 700 may be mounted to the upper surface of such a coil seating part 940.

The power transmission means 700 may be located to be adjacent to the power reception means 220 provided in the container body 100, and may function to supply power to the power reception means 220. Accordingly, such a power transmission means 700 may be configured as an induction coil. That is, like the power reception means 220, the induction coil may be configured by being wound multiple times on the same plane, such as a PCB, in a spiral shape relative to a transmission center point (not shown).

In addition, although now shown in detail, the main body 500 may have an oscillation circuit part therein. Such an oscillation circuit part may generate current and apply the current to the power transmission means 700. Accordingly, a magnetic field may be formed in the power transmission means 700 by the applied current. Furthermore, the oscillation circuit part may change the intensity of the current applied to the power transmission means 700, and thus the magnetic field may be changed in the power transmission means 700 by the change of the current intensity.

Accordingly, as in the present disclosure, with the power reception means 220 and the power transmission means 700 installed to vertically correspond to each other, as the intensity of current applied to the power transmission means 700 changes, the magnetic field of the power transmission means 700 may be changed, and a magnetic flux passing through the power reception means 220 may be changed due to inductive coupling between the power transmission means 700 and the power reception means 220, so the induced electromotive force may be generated in the power reception means 220. Furthermore, such an induced electromotive force may be supplied to the light transmission module 810.

The light reception module 820 may be provided at a side opposite to the power transmission means 700. That is, the light reception module 820 may be mounted in a receiving groove 822 formed in the left end of the upper surface of the upper step 920, which is a position vertically corresponding to the light transmission module 810 mounted to the container body 100.

Specifically, the receiving groove 822 having a predetermined size may be formed in the left end of the upper surface of the upper step 920 by being depressed therefrom, and the light reception module 820 may be mounted in such a receiving groove 822.

As described above, the light reception module 820 may include the photosensor. The light reception module 820 may receive light transmitted by the light transmission module 810, and transmit a light reception signal.

In addition, a Hall sensor 950 and a container body detection switch 960 may be provided on the upper surface of the upper step 920. That is, a container body switch groove 962 and a sensor groove 952 may be formed respectively in the front end portion and rear end portion of the upper surface of the upper step 920 by being depressed therefrom, and the container body detection switch 960 and the Hall sensor 950 may be mounted in the container body switch groove 962 and the sensor groove 952, respectively.

The container body detection switch 960 may be configured as a reed switch, and may detect whether the container body 100 is seated on the upper surface of the main body 500. When such a container body detection switch 960 is provided, a magnet (not shown) corresponding thereto may be provided on the lower end of the container body 100.

The Hall sensor 950 is intended to determine the type of the container body 100 seated on the main body 500, and even in this case, a signal transmission means corresponding thereto may be required on the lower surface of the container body 100.

The upper step ring 914 mounted to the edge of the upper step 920 may be configured to be divided into two parts. That is, as illustrated in FIG. 6, the upper step ring 914 may include a protruding piece 916 covering the outer surface of the coil seating part 940 formed on the right surface of the upper step 920 by protruding therefrom to the right, and a curved piece 918 covering the remaining outer surface of the upper step 920. As described above, the protruding piece 916 and the curved piece 918 are preferably made of metal such as stainless steel.

Meanwhile, the upper part of the upper step 920 may be covered by a cover 970. Accordingly, the power transmission means 700, the light reception means 820, the container body detection switch 960, and the Hall sensor 950 mounted to the upper step 920 may be covered and protected by the cover 970.

In addition, the seating step 900 may have a center part vertically formed therethrough such that the blade assembly 200 of the container body 100 and the motor assembly 600 provided in the main body 500 may be connected to each other.

More particularly, the circular end receiving groove 980 may be formed in the center portion of the upper step 920 by being depressed therefrom, and the circular end 174 of the lower end of the container body 100 described above may be received in such a circular end receiving groove 980. That is, the upper step 920 may have the shape of a circular ring as a whole, and the circular end receiving groove 980 having a circular shape may be formed in the center portion of such an upper

### step 920.

At least one protrusion groove 982 may be formed in the inner surface of the upper step 920. The protrusion groove 982 may be formed by being repressed radially from the circular end receiving groove 980, and the mounting protrusions 174a of the container body 100 may be seated in the protrusion grooves 982.

Accordingly, the protrusion grooves 982 may be configured to have the size and number thereof corresponding to the size and number of the mounting protrusions 174a, and the size of the width of the protrusion groove 982 may be configured to be the same as or larger than the size of the width of the mounting protrusion 174a.

A cover ring 912' may be provided on the lower end part of the lower step 910. That is, the cover ring 912' may be provided on the coupling portion of the lower step ring 912 with the upper surface of the main body 500. The cover ring 912' may be made of a material having elasticity, and may be configured to have a circular ring shape as illustrated in the drawings. Accordingly, the covering 912' may cover a gap between the lower step ring 912 and the upper surface of the main body 500 or may facilitate the coupling of the lower step ring 912 therewith.

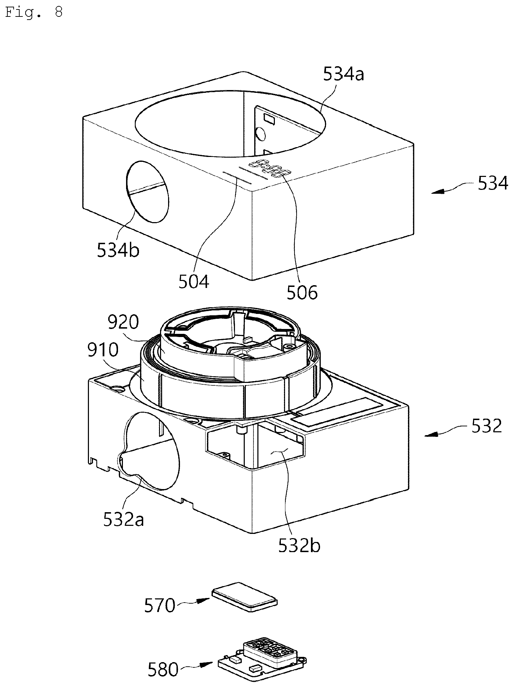

FIG. 8 illustrates the exploded perspective view of the configuration of a main body casing constituting the main body 500. The main body 500 may be formed in a hexahedral shape as a whole, and an approximate exterior thereof may be constituted by the main body casing 530.

As illustrated in FIG. 8, the main body casing 530 may be configured as a rectangular box-shaped hexahedron having an open lower part, and the lower side of the main body casing 530 may be covered by a base plate 540 to be described below and the base end 510 described above.

The main body casing 530 is preferably configured as a double structure. That is, the main body casing 530 may be composed of an inner casing 532 and an outer casing 534 provided respectively at inner and outer sides thereof, wherein the outer casing 534 is preferably made of a metal material or a material having a metal texture.

The seating step 900 may constitute a portion of the upper exterior of the main body casing 530. That is, the seating step 900 may be formed on the center portion of the upper surface of the main body casing 530, and thus such a seating step 900 may be constitute a portion of the upper surface of the main body 500.

Specifically, the seating step 900 including the lower step 910 and the upper step 920 may be formed on the upper surface of the inner casing 532 by protruding upward therefrom. Such a seating step 900 may be formed to be integrated with the inner casing 532 or may be formed separately from the inner casing 532 to be coupled thereto.

As illustrated in FIG. 8, each of the inner casing 532 and the outer casing 534 may be configured to have an open lower part, and the outer casing 534 may be configured to have size larger than the size of the inner casing 532. Accordingly, the inner casing 532 is preferably configured such that the inner casing 532 can be inserted into the outer casing 534 from the lower side thereof.

A casing hole 534a may be formed vertically through the upper surface of the outer casing 534 such that the seating step 900 of the inner casing 532 can be inserted into the casing hole 534a, and an outer knob hole 534b may be formed through the front surface of the outer casing 534 in a front-to-rear direction such that the knob 502 can be inserted into the outer knob hole 534b.

A hole through which the knob 502 passes may be formed even in the inner casing 532. That is, an inner knob hole 532a through which the knob 502 passes may be formed through the front surface of the inner casing 532 in the front-to-rear direction.

A module seating part 532b may be formed in the inner casing 532. That is, as illustrated in FIG. 8, the module seating part 532b may be formed by partially cutting the corner of the right front portion of the upper surface of the inner casing 532. A touch module 570 and a display module 580 are preferably located in such a module seating part 532b.

When the touch module 570 and the display module 580 are installed in the module seating part 532b, the touch module 570 and the display module 580 may be located under the touch manipulation part 504 and the display part 506 of the outer casing 534. Additionally, the touch module 570 provided in the module seating part 532b of the inner casing 532 and the touch manipulation part 504 of the outer casing 534 may be installed to be vertically in close contact with each other, and accordingly, the touch module 570 may detect the touch or press of the touch manipulation part 504.

The touch module 570 may have a function to detect the touch or press of the touch manipulation part 504 by a user, and the display module 580 may allow the operation state or temperature of the blender to be displayed to the outside through the display part 506.

The installation states of the touch module 570 and the display module 580 will be described in detail below.

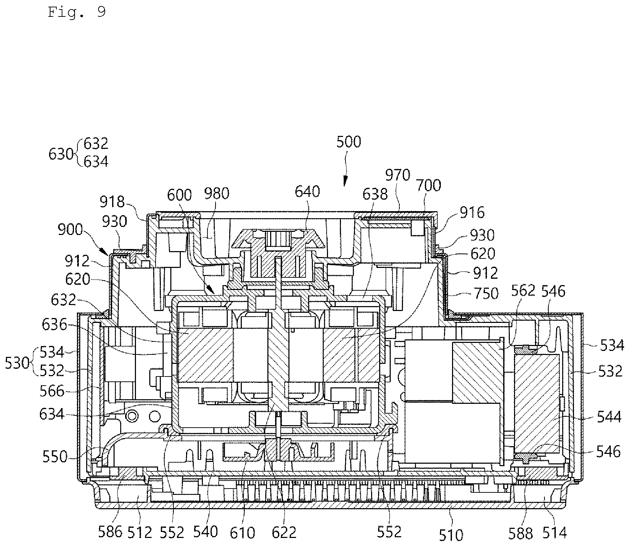

FIG. 9 illustrates a sectional view showing the internal configuration of the main body 500.

Referring to the drawing, as described above, the main body 500 may be formed in a hexahedral shape as a whole, and the main body casing 530 may be configured as a double structure. The exterior of the main body 500 may be constituted by the outer casing 534.

As described above, the inner casing 532 may be provided inside the outer casing 534 and may substantially support multiple parts provided therein. Accordingly, space in which the motor assembly 600 described above and a PCB module are mounted may be defined inside the inner casing 532.

The motor assembly 600 may be installed on the center portion of the main body 500 and may include a motor 620 having a motor shaft 622 provided by passing vertically through a center part thereof, and a motor housing 630 constituting the exterior of the motor 620.

The motor housing 630 may include an upper housing 632 which covers the upper half part of the motor 620, and a lower housing 634 which covers the lower half part of the motor 620, wherein the upper housing 632 and the lower housing 634 may be securely coupled to each other by multiple fastening bolts 636.

The motor shaft 622 may be formed long vertically inside the main body 500, wherein the cooling fan 610 described above may be coupled to the lower end of the motor shaft 622 and a power transmission end 640 connected to the blade assembly 200 may be connected to the upper end of the motor shaft 622. The power transmission end 640 may be configured to protrude to the outside of the upper part of the main body 500, and may transmit the rotational force of the motor 620 to the blade assembly 200.

Multiple PCB modules 560, 562, 564, and 566 may be provided inside the main body 500.

Specifically, the open lower surface of the inner casing 532 constituting the main body casing 530 may be covered by the base plate 540, and the multiple PCB modules 560, 562, 564, and 566 may be installed at the upper side of such a base plate 540.

The base plate 540 may be configured to have the shape of a rectangular plate having size corresponding to the size of the open lower surface of the inner casing 532, and the edge of such a base plate 540 is preferably coupled to the lower end of the inner casing 532.

The base plate 540 may be provided on the lower end of the main body 500 and may function to support the motor assembly 600 and multiple parts such as the PCB modules 560, 562, 564, and 566.

The base end 510 described above may be provided on the lower side of the base plate 540.

The PCB modules 560, 562, 564, and 566 may be disposed to be spaced apart from each other or be installed separately for each function inside the inner casing 532. That is, the PCB modules 560, 562, 564, and 566 may be disposed to be spaced apart from each other to surround the motor assembly 600 outside of the motor assembly 600, and may include a main PCB module 560 to control the overall operation of the blender, an inverter PCB module 562 to control the motor 620, a power PCB module 564 to control an input power, and a filtering PCB module 566 to remove noise.

In addition, according to the function of the blender of the present disclosure, these PCB modules 560, 562, 564, and 566 may be additionally provided, or a portion thereof may be omitted.

A heat dissipation member 544 for heat dissipation may be provided in the inverter PCB module 562. As illustrated in FIG. 9, the heat dissipation member 544 is preferably installed to be in contact with at least one of the multiple PCB modules 560, 562, 564, and 566, and may be configured such that multiple heat dissipation fins thereof dissipate heat in contact with air.

An air guide 550 may be provided on the upper surface of the base plate 540.

The air guide 550 may guide the discharge of air moved by the cooling fan 610, and the motor assembly 600 may be seated on the upper surface of such an air guide 550, and the cooling fan 610 may be located inside the air guide 550.

The cooling fan 610 may have blades having various shapes, and may be configured to inhale air of the inside of the motor assembly 600 located at the upper side of the cooling fan and to discharge the air laterally or downward.

Accordingly, when the cooling fan 610 rotates together with the motor shaft 622, air outside the main body 500 may be introduced into the main body 500, may flow downward through the inside of the motor housing 630, and then may flow due to the cooling fan 610 to be discharged through the air guide 550 to the outside.

A sealing member 552 may be provided between the air guide 550 and the motor assembly 600. That is, the motor assembly 600 may be seated on the upper surface of the air guide 550, and the sealing member 552 may be provided on the edge of the seating surface of the lower end of such a motor assembly 600.

The sealing member 552 is preferably made of an elastic material such as rubber, and may protect the motor assembly 600 from an impact generated while the motor assembly 600 sits on the air guide 550, and may cover a gap between the motor assembly 600 and the air guide 550 so as to block the movement of air or liquid.

Meanwhile, although not shown in detail, a discharge means may be provided on the main body 500 so as to guide liquid or foreign matter accumulated on the upper surface of the main body 500 such that the liquid or foreign matter is discharged to the outside.

The motor assembly 600 may be installed at the center portion of the main body 500, and may be composed of the motor shaft 622, the motor 620, and the motor housing 630.

In addition, as described above, the motor housing 630 may include the upper housing 632 which covers the upper half part of the motor 620, and the lower housing 634 which covers the lower half part of the motor 620, wherein the upper housing 632 and the lower housing 634 may be coupled to each other by the multiple fastening bolts 636.

The motor shaft 622 may be vertically installed through the center part of the motor 620, and the cooling fan 610 may be coupled to the lower end of such a motor shaft 622, and may be located inside the air guide 550 so as to force the flow of air. That is, due to the rotation of the cooling fan 610, air outside the main body 500 may be introduced into the main body 500 and then may flow along the air guide 550 to be discharged to the lower part of the main body 500.

Multiple housing holes 638 may be formed in the upper surface of the upper housing 632 by passing vertically therethrough. Accordingly, through the housing holes 638, air present above the motor assembly 600 may be introduced into the motor assembly 600.

The motor housing 630 is preferably configured such that sides thereof are covered. That is, the sides of each of the upper housing 632 and the lower housing 634 may be covered, and thus air introduced through the housing holes 638 into the motor assembly 600 may flow downward and may be discharged to the inside of the air guide 550.

Accordingly, the exterior of the motor assembly 600 may be constituted by the upper housing 632 and the lower housing 634, wherein the upper housing 632 may be configured to be covered in sides thereof, and the lower housing 634 may be configured to be sealed in all portions except for a necessary hole such as a work hole (not shown) through which a power line for supplying power passes.

This is intended to cover all sides of the motor housing 630, and air introduced through the housing holes 638 of the upper housing 632 into the motor assembly 600 may not be discharged to the side, but may flow to the lower part of the motor assembly 600 to be introduced into the air guide 550.

The main body 500 may be provided with the air guide 550 so as to guide the discharge of air passing through the motor assembly 600 to the lower part of the main body 500. That is, as described above, the air guide 550 may be in contact with the lower end of the motor assembly 600 and may guide air flowing to the internal lower side of the motor assembly 600 from an internal upper side thereof to the lower side of the main body 500. Specifically, the air guide 550 may be mounted to the base plate 540 provided on the lower end of the main body 500.

Meanwhile, as described above, the base end 510 having space in which the wireless power module 520 is received may be provided under the base plate 540.

An air discharge hole 512 may be formed vertically through a first end of the base end 510 so as to guide the discharge of air introduced into the main body 500 back to the outside. That is, as illustrated in the drawing, multiple air discharge holes 512 may be formed vertically through a portion adj acent to the left end of the bottom surface of the base end 510.

In addition, an air introduction hole 514, which is a passage through which air outside the main body 500 is introduced into the main body 500, may be formed vertically through the second end of the base end 510. That is, multiple air introduction holes 514 may be formed vertically through a portion adj acent to the right end of the bottom surface of the base end 510.

An air introduction guide hole 588, which guides air introduced into the main body 500, and an air discharge guide hole 586, which guides the discharge of air inside the main body 500 to the outside, may be formed vertically through the base plate 540.

The air introduction guide hole 588 of the base plate 540 and the air introduction hole 514 of the base end 510 may be installed at positions corresponding vertically to each other. That is, the air introduction guide hole 588 is preferably located above the air introduction hole 514. This is intended to allow air introduced into the main body 500 from the lower outside of the main body 500 through the air introduction hole 514 to directly pass through the air introduction guide hole 588.

The air discharge guide hole 586 of the base plate 540 and the air discharge hole 512 of the base end 510 may also be installed at positions corresponding vertically to each other. That is, the air discharge guide hole 586 is preferably installed to be located directly above the air discharge hole 512. This is intended to allow the internal air of the main body 500 passing through the air discharge guide hole 586 to be directly introduced into the air discharge hole 512.

The inverter PCB module 562 or the heat dissipation member 544 is preferably installed above the air introduction guide hole 588 of the base plate 540. That is, air outside the main body 500 may flow upward by sequentially passing through the air introduction hole 514 and the air introduction guide hole 588 from the lower side of the right end of the main body 500. Accordingly, the inverter PCB module 562 and the heat dissipation member 544 are preferably installed above the air introduction guide hole 588 such that the cold outside air is in contact with and heat exchanged with the inverter PCB module 562 and the heat dissipation member 544.

The heat dissipation member 544 may be fixedly installed in the main body 500 by the heat dissipation frame 546. That is, the heat dissipation frame 546 may be configured to cover the upper, lower, and side ends of the heat dissipation member 544, wherein the lower end of the heat dissipation member 544 may be in contact with the base plate 540 such that the heat dissipation member 544 is supported by the base plate 540.

A blocking wall having a predetermined height which blocks the lateral movement of air may be formed on the edge of the air introduction hole 514 or the air discharge hole 512 of the base end 510. Such a blocking wall is intended to block the lateral movement of air and to guide the vertical movement of air.

The sealing member 552 made of an elastic material may be provided between the motor assembly 600 and the air guide 550. The sealing member 552 may have a circular ring shape as a whole, and preferably has size and shape corresponding to the lower end of the motor assembly 600.

The sealing member 552 may function to seal a gap between the lower end of the motor assembly 600 and the air guide 550 such that the flow of air through the gap is prevented, and may function to protect the motor assembly 600 from an impact generated while the motor assembly 600 is installed on the air guide 550.

A discharge member 750 may be provided in the main body 500. The discharge member 750 is intended to discharge static electricity generated in the main body 500 to the outside, and is preferably provided inside the main body casing 530 and the seating step 900.

Specifically, the discharge member 750 may be made of metal and may function to connect the main body casing 530 constituting the exterior of the main body 500 with the lower step ring 912 and the upper step ring 914. When static electricity is formed in any one portion of metallic exterior casings, the one portion may be connected to a ground bracket (not shown to discharge the static electricity.

In the present disclosure, the discharge member 750 is provided to connect the main body casing 530 with each of the lower step ring 912 and the protruding piece 916.

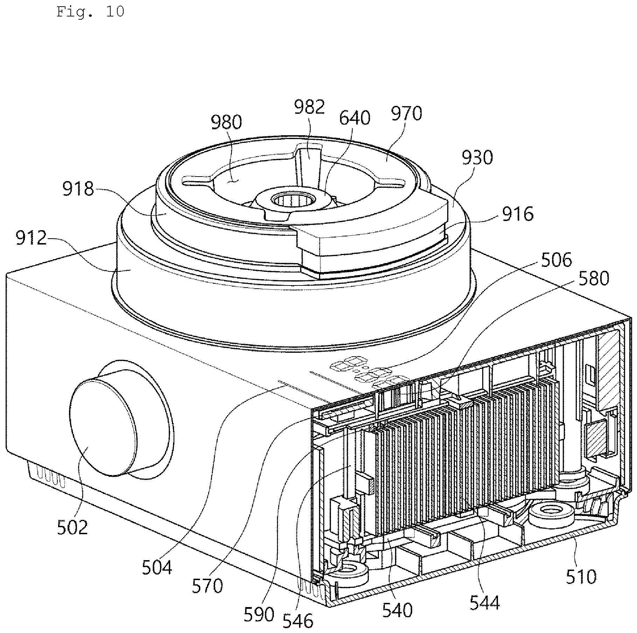

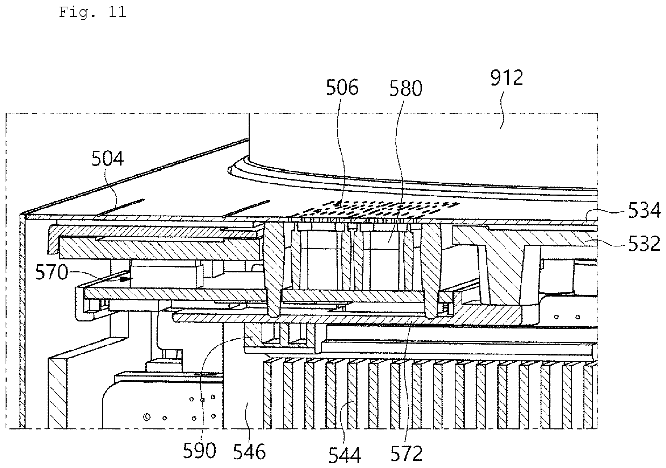

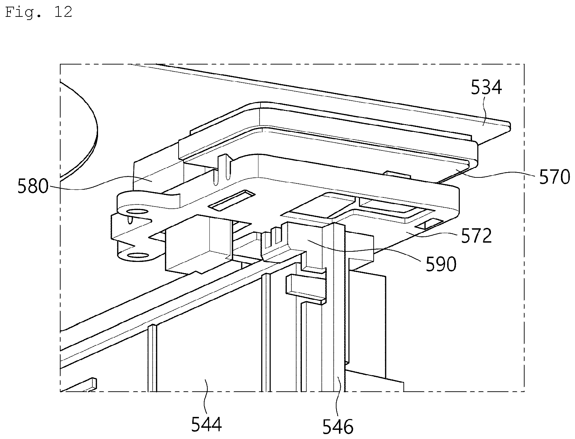

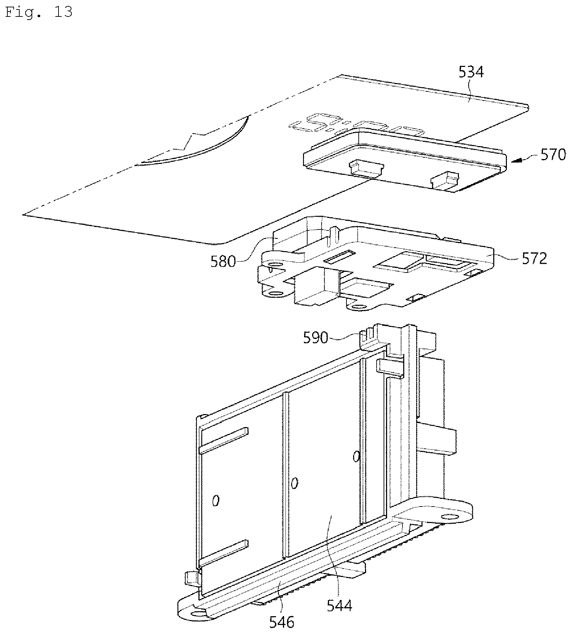

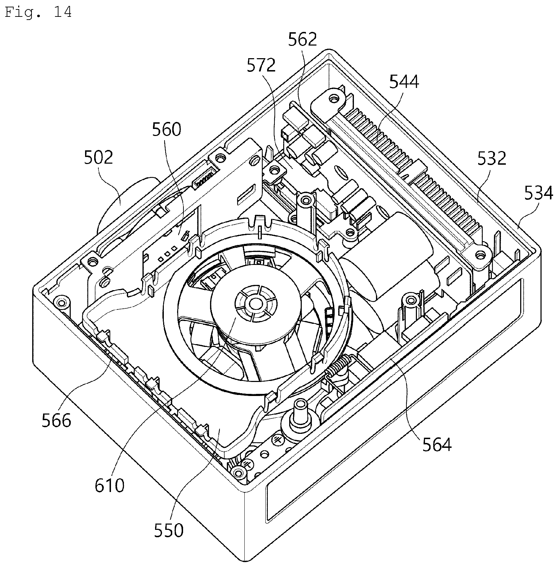

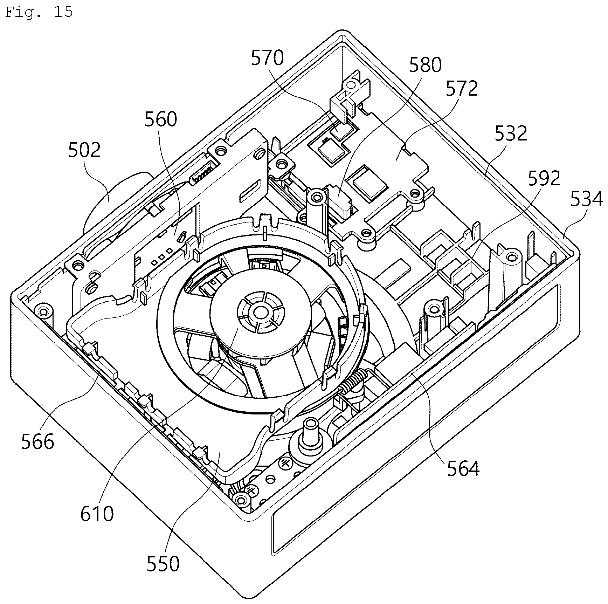

FIGS. 10 to 15 illustrate the internal configuration of the main body 500. That is, FIG. 10 illustrates a cutaway perspective view shown by cutting a portion of the right end of the main body 500, FIG. 11 illustrates a cutaway perspective view shown by cutting a portion of components under the touch manipulation part 504 and the display part 506 of the main body 500, and FIGS. 12 and FIG. 13 respectively illustrate a partial perspective view and an exploded partial perspective view showing the installed state of the touch module 570 provided inside the main body 500. Additionally, FIG. 14 illustrates a bottom perspective view of the inside of the main body 500 showing the internal configuration of the main body 500 in a state in which the base plate 540 and the base end 510 covering the lower side of the main body casing 530 are removed therefrom, and FIG. 15 illustrates a bottom perspective view of the inside of the main body 500 showing a state in which the inverter PCB module 562 and the heat dissipation member 544 are removed from the main body of FIG. 14. That is, FIGS. 14 and 15 are perspective views of the inside of the main body 500 turned upside down.

As illustrated in these drawings, the main body 500 may be provided with the touch module 570 configured to detect a touch by a user, and the display module 580 configured to display the operation state of the blender, wherein these touch module 570 and display module 580 may be configured to be supported by the support means 590.

The touch module 570 is preferably provided under the touch manipulation part 504 formed on the upper surface of the main body 500. That is, the touch manipulation part 504 may be provided on the upper surface of the main body 500 so as to manipulate the starting or stopping of the operation of the blender, or a time setting thereof, and the touch module 570 may be provided under such a touch manipulation part 504, the touch module 570 functioning to detect the press or touch of the touch manipulation part 504 by a user so as to transmit a signal.

The display module 580 may be provided under the display part 506 formed on the upper surface of the main body 500, and may be configured as at least one seven-segment display. Accordingly, through the display module 580, the display part 506 may display the temperature, operation time, or operation signal of the blender to the outside.

The support means 590 may function to block the downward movement of the touch module 570. That is, the support means 590 may be provided under the touch module 570 and may prevent the touch module 570 from sagging or moving downward when a user presses or touches the touch manipulation part 504. Accordingly, due to the prevention of the downward movement of the touch module 570, when a user presses or touches the touch manipulation part 504, the signal of the touch manipulation part 504 may be accurately transmitted to the touch module 570, and a user's touch feeling may be improved.

The touch module 570 may be held by the PCB holder 572, and the support means 590 may be provided under the PCB holder 572. That is, as illustrated in FIG. 13, the PCB holder 572 having the shape of a flat plate having predetermined size and thickness may be provided under the touch module 570 and the display module 580 (above the touch module 570 and the display module 580 in FIGS. 14 and FIG. 15), and the touch module 570 and the display module 580 may be placed to be supported on the upper surface of such a PCB holder 572 (on a lower surface thereof in FIGS. 14 and 15).

The PCB holder 572 may be coupled to the inner casing 532. That is, the PCB holder 572 may be configured to be mounted to the lower part of the upper surface of the inner casing 532 by at least one screw (an upper part thereof in FIGS. 14 and 15).

The support means 590 may be provided on an end of the heat dissipation frame 546 which fixedly supports the heat dissipation member 544 provided inside the main body 500. More specifically, as described above, the heat dissipation frame 546 may be installed to cover the upper and lower ends of the heat dissipation member 544 and may fixedly support the heat dissipation member 544, and the support means 590 may be provided on the upper end of the front end part of such a heat dissipation frame 546.

As illustrated in FIG. 12, the support means 590 may be formed by protruding sideward or upward from the upper end of the heat dissipation frame 546, and such a support means 590 may be installed to have an upper end in close contact with the lower surface of the PCB holder 572.

As illustrated in FIG. 12, at least one groove may be formed in the support means 590. That is, at least one groove which is depressed may be formed on the upper surface of the support means 590, or at least one groove recessed inward from a side surface of the support means 590 may be formed on the upper surface of the support means 590. Accordingly, when the groove is formed in the support means 590, the support means 590 may be decreased in weight and material cost while supporting the PCB holder 572.

In addition, the support means 590 may include at least one rib. That is, as illustrated in FIG. 11, the support means 590 may be provided with at least one rib protruding upward, and such a rib may be configured to have an upper end in contact with the PCB holder 572.

Furthermore, a support member 592 may be provided under the upper surface of the main body casing 530 such that the sagging of the main body casing 530 is prevented even when the upper surface of the main body casing 530 is pressed by a user.

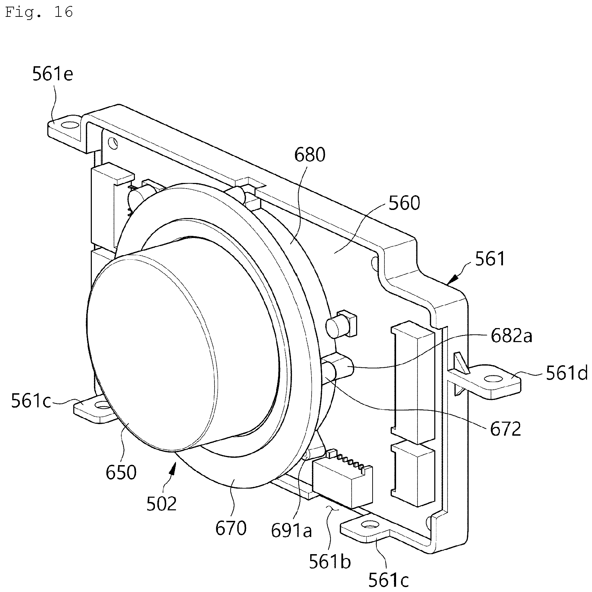

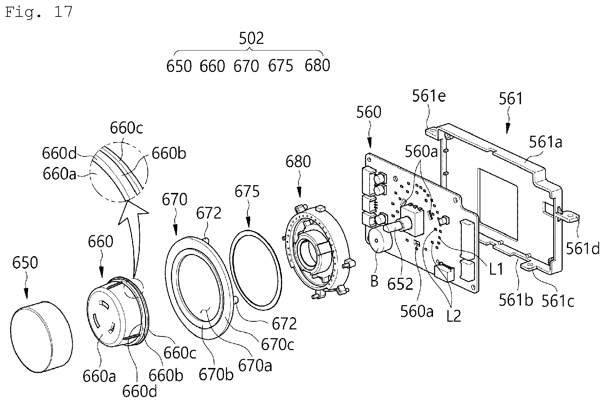

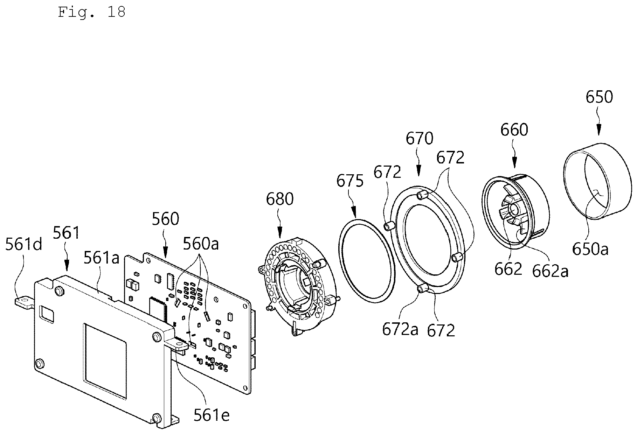

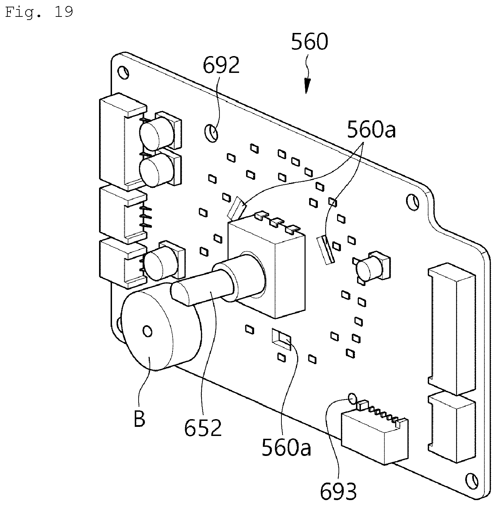

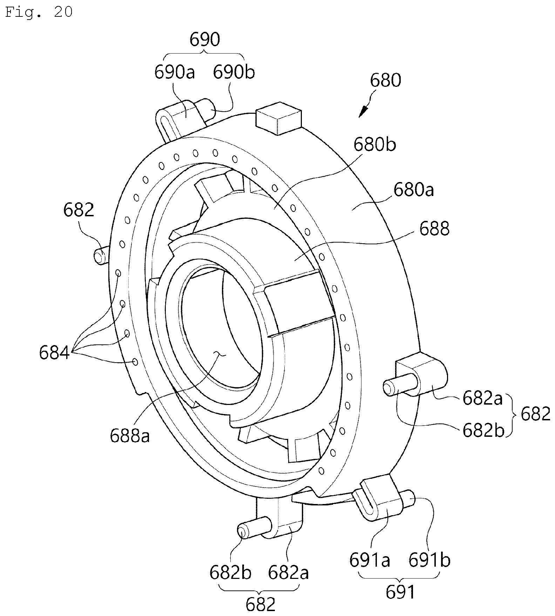

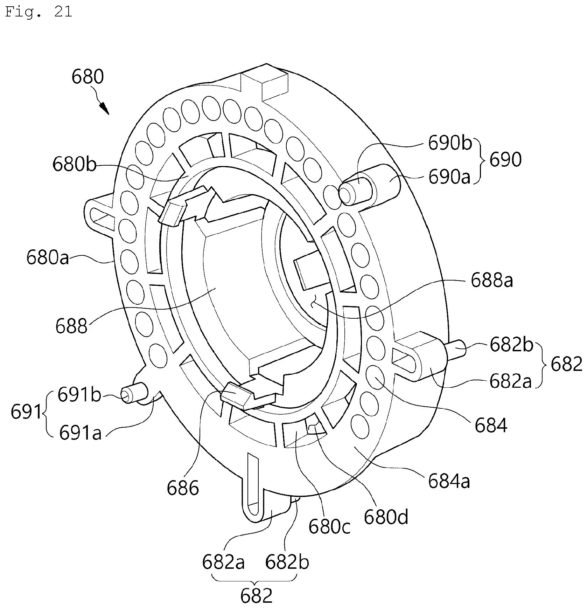

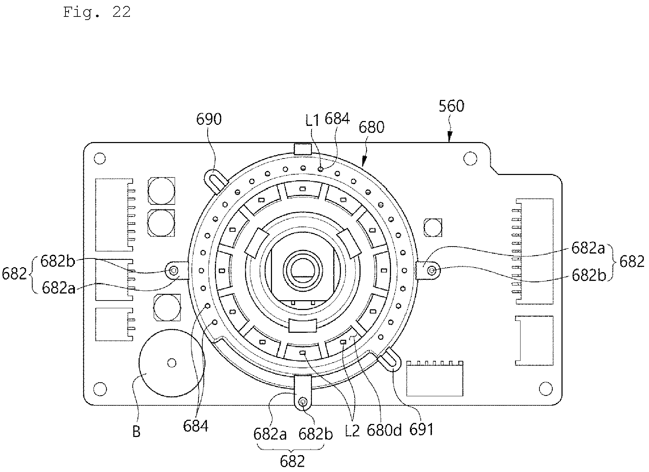

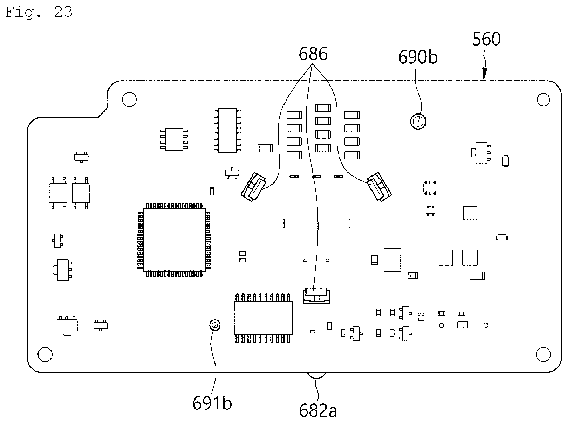

FIGS. 16 to 23 illustrate the knob 502 and the coupled state of the same. That is, FIG. 16 illustrates a perspective view of a state in which the knob 502 is coupled to the main PCB module 560 and the main bracket 561, and FIGS. 17 and 18 illustrate the front and rear exploded perspective views of FIG. 16, respectively. Furthermore, FIG. 19 illustrates a perspective view showing the detailed configuration of the main PCB module 560, FIGS. 20 and 21 respectively illustrate the front and rear perspective view of a light guide 680 constituting the knob 502, and FIGS. 22 and 23 respectively illustrate the front and rear views of a state in which the light guide 680 is coupled to the main PCB module 560.

As illustrated in these drawings, the main PCB module 560 may be configured to control the operation of the blender, and may be provided in the front half part of the inside of the main body 500, and may be mounted to the main bracket 561.

A knob rotation shaft 652 to which the knob 502 is mounted may be provided on the center of the main PCB module 560. The knob rotation shaft 652 may be coupled to the rotational center of the knob 502, and when manipulating the knob 502, the knob rotation shaft 652 may be rotated together with the manipulating the knob 502.

The main PCB module 560 may detect the rotation of the knob rotation shaft 652 such that the operation mode of the blender can be selected, a period of operation time thereof can be preset, and the rotation speed of the motor assembly 600 can be preset.

The main PCB module 560 may be provided with a buzzer B. The buzzer B may notify the operation state of the blender to a user by sound. For an example, the buzzer B may output a specific sound when power is applied to the blender such that a user can be informed of the operational readiness of the blender. The main PCB module 560 may be provided with a speaker instead of the buzzer B.

Meanwhile, the knob rotation shaft 652 may be disposed on the center portion of the main PCB module 560, and multiple LEDs L1 and L2 may be disposed along the circumference of the knob rotation shaft 652. The LEDs L1 and L2 may include multiple LEDs disposed in a circle, and may be composed of outer LEDs L1 disposed at an outer side, and inner LEDs L2 disposed at an inner side, for example radially with respect to the knob rotation shaft 652.

The outer LEDs L1 may be disposed along an outer part 680a to be described below. Some of the multiple outer LEDs L1 may be lit according to the manipulation of the knob 502. That is, when a user inputs a specific manipulation by manipulating the knob 502, outer LEDs L1 corresponding to the associated manipulation may be lit.

For an example, when a user selects a preset specific operation mode by rotating the knob 502, outer LEDs L1 corresponding to the operation mode may be lit. Additionally, for another example, when a user inputs a period of specific time by rotating the knob 502, outer LEDs L1 corresponding to the period of specific time may be lit. Furthermore, for still another example, when a user inputs a specific rotation number by rotating the knob 502, outer LEDs L1 corresponding to the rotation number may be lit.

Meanwhile, the multiple outer LEDs L1 may not be disposed at equal intervals. That is, in a case in which a target to be manipulated is different depending on the rotation portion of the knob 502, intervals at which the outer LEDs L1 are disposed may be different for each portion.

For an example, in a section in which the operation mode is preset, interval between the outer LEDs L1 may be large, and in a section in which the period of time or the rotation number is preset, an interval between the outer LEDs L1 may be narrow, so more outer LEDs may be disposed. However, all of the multiple outer LEDs L1 may be disposed along the circumference of an imaginary circle, that is, along the outer part 680a of the knob 502.

The inner LEDs L2 may be disposed along an inner part 680b of the knob 502 to be described below. The inner LEDs L2 may be disposed to be closer to the knob rotation shaft 652 than the outer LEDs L1 and may be disposed at positions corresponding to the inner part 680b. Additionally, all of the multiple inner LEDs L2 may be disposed at equal intervals, and may be disposed along the circumference of an imaginary circle, that is, along the inner part 680b to be described below.

All of the inner LEDs L2 may be simultaneously lit to indicate the state of the blender. For example, when power is supplied to the blender, the inner LEDs L2 may be turned on and may notify the operational readiness of the blender to a user. In this case, the inner LEDs L2 may emit light of color different from the color of light emitted by the outer LEDs L1. Additionally, the inner LEDs L2 may emit light of various colors depending on a situation.

Multiple PCB coupling holes 560a may be formed around the knob rotation shaft 652. Guide coupling protrusions 686 to be described below may be inserted into the PCB coupling holes 560a.

Accordingly, the PCB coupling holes 560a may be provided to have the number of the PCB coupling holes 560a corresponding to the number of the guide coupling protrusions 686 at positions corresponding to the guide coupling protrusions 686. For example, as illustrated in FIG. 19, the PCB coupling holes 560a may be disposed radially relative to the knob rotation shaft 652, and may include three PCB coupling holes disposed at equal intervals.

The main PCB module 560 may be coupled to the main bracket 561, for example by at least two fastening members such as a screw.

The main bracket 561 may allow the main PCB module 560 to be mounted to the inner side of the inner casing 532. The main bracket 561 may be formed to have the shape of a rectangular frame and may be configured such that the main PCB module 560 is mounted to the inner side of the main bracket 561.

The main bracket 561 may include a bracket edge 561a having the shape of a rectangular frame. The bracket edge 561a may have predetermined width, and may be formed along the periphery of the main PCB module 560.

A cut edge part 561b through which a wire connector connected to the main PCB module 560 passes may be formed on a side of the lower end of the bracket edge 561a.

The periphery of the main PCB module 560 may be in contact with the inner surface of the bracket edge 561a. Furthermore, multiple protrusions may be formed on the inner surface of the bracket edge 561a so as to restrain the end part of the main PCB module 560.

One or more bracket coupling parts 561c, 561d, and 561e may be formed on the outer side of the bracket edge 561a by protruding outward therefrom. The bracket coupling parts 561c, 561d, and 561e may include a first bracket coupling part 561c formed on the lower surface of the main bracket 561, and a second bracket coupling part 561d and a third bracket coupling part 561e which are formed respectively on the opposite side surfaces of the main bracket 561. Additionally, the upper surface of the main bracket 561 may be in contact with and restrained by the inner upper surface of the inner casing 532.

Specifically, the first bracket coupling part 561c may extend forward from the front end part of the lower surface of the main bracket 561.

The first bracket coupling part 561c may include a pair of first bracket coupling parts disposed to be spaced apart from each other in a left-to-right direction. For an example, the pair of first bracket coupling parts 561c may be disposed on the opposite sides of the lower surface of the main bracket 561.

The first bracket coupling part 561c may extend forward. The extending first bracket coupling part 561c may be coupled to the lower end of the inner casing 532. Accordingly, although now shown in detail, a separate mounting part may be formed on the lower end of the inner casing 532 such that the mounting part is located at a position corresponding to the first bracket coupling part 561c, and may support the first bracket coupling part 561c.

A screw hole to which a screw S is fastened may be formed in the first bracket coupling part 561c. Accordingly, the screw S may pass through the screw hole formed in the first bracket coupling part 561c, and may be fastened to the lower end of the inner casing 532 or the mounting part (not shown).

The second bracket coupling part 561d may extend from a side surface (a right side surface in FIG. 17) of the main bracket 561 to a side (to a right side in FIG. 17). Furthermore, a separate mounting part may be provided on the inner side of the inner casing 532 such that the mounting part is located at a position corresponding to the second bracket coupling part 561d, and may support the second bracket coupling part 561d. Additionally, a screw hole to which a screw is fastened may be formed in the second bracket coupling part 561d, and thus the second bracket coupling part 561d may be fastened to the inner casing 532 or the mounting part (not shown) by the screw.

The third bracket coupling part 561e may extend from another side surface (a left side surface in FIG. 17) of the main bracket 561 located at a side opposite to the second bracket coupling part 561d to a side (to a left side in FIG. 17). Furthermore, a separate mounting part may be provided on the inner side of the inner casing 532 such that the mounting part is located at a position corresponding to the third bracket coupling part 561e, and may support the third bracket coupling part 561e. A screw hole to which a screw is fastened may be formed in the third bracket coupling part 561e. Accordingly, the screw may pass through the screw hole and thus the third bracket coupling part 561e may be fastened to the inner casing 532 or the mounting part (not shown).

Accordingly, the main bracket 561 may be configured to be securely fastened to the entire peripheral surface of the inner side of the inner casing 532, that is, to four surfaces thereof, or may be configured to be fastened to at least three surfaces of the inner casing 532. Accordingly, the knob 502 mounted to the main PCB module 560 may be maintained to be securely supported and fastened.

The knob 502 may be mounted rotatably to the main PCB module 560 and may be disposed to facilitate the rotation manipulation of the knob by a user by protruding to the outside of the outer casing 534.

The knob 502 may include, as a whole, a knob decoration 650, a knob body 660, a knob ring 670, and the light guide 680.

More specifically, the knob decoration 650 may constitute a portion of the exterior of the knob 502, and particularly, may protrude to the outside of the outer casing 534 and may constitute a part manipulated directly by a user.

The knob decoration 650 may be made of the same material as or of a material having the same texture as the outer casing 534, and may be configured to appear to be integrated with the exterior of the main body 500.

The knob decoration 650 may be configured to have a cylindrical shape having an open rear surface, and the knob decoration 650 may be configured to have a diameter smaller than the diameter of the outer knob hole 534b formed in the front surface of the outer casing 534.

Accordingly, the knob decoration 650 may be located inside the outer knob hole 534b. Additionally, the knob decoration 650 may be open rearward, and may have a body receiving space 650a in which the knob body 660 can be received.

The knob body 660 may be coupled to the knob rotation shaft 652, and may allow the knob rotation shaft 652 to be substantially rotated by the manipulation of the knob by a user such that rotation manipulation is input thereto. The knob body 660 may also be configured to have a cylindrical shape having an open rear surface.

The knob body 660 may, as a whole, include a body insertion part 660a inserted into the body receiving space 650a, a first knob protrusion part 660b protruding outward from the rear end of the body insertion part 660a, and a second knob protrusion part 660c protruding from the rear end of the first knob protrusion part 660b.

The body insertion part 660a may be configured to have a shape corresponding to the body receiving space 650a. Furthermore, an adhesive groove may be formed in the front surface of the body insertion part 660a such that an adhesive is provided in the adhesive groove, and in a state in which the body insertion part 660a is inserted into the body receiving space 650a, the body insertion part 660a may be bonded or coupled to the knob decoration 650.

The first knob protrusion part 660b may protrude outward to have a diameter larger than the diameter of the body insertion part 660a. Accordingly, a support surface 660d may be formed between the first knob protrusion part 660b and the body insertion part 660a. The support surface 660d may be in contact with the rear end of the knob decoration 650.

The first knob protrusion part 660b may be configured to have an outer diameter corresponding to the outer diameter of the knob decoration 650, and thus during the coupling of the knob decoration 650 to the knob body 660, the protrusion of a coupled portion thereof may be minimized such that the knob decoration 650 appears to be integrated with the knob body 660.

The second knob protrusion part 660c may protrude outward to have a diameter larger than the diameter of the first knob protrusion part 660b. The second knob protrusion part 660c may be configured to have an outer diameter larger than the diameter of a ring opening 670a formed in the knob ring 670. The first knob protrusion part 660b may be configured to have the outer diameter smaller than the inner diameter of the knob ring 670, and may be located inside the ring opening 670a. In this case, the second knob protrusion part 660c may be located behind the ring opening 670a such that the knob body 660 is prevented from being removed to the outside of the knob ring 670.

A shaft coupling part 662 may be formed in the inner center of the knob body 660. The shaft coupling part 662 may extend to have the shape of a boss having a hollow inside, and may have space defined therein such that the knob rotation shaft 652 can be inserted into the space. In this case, the shaft coupling part 662 may be configured to have an internal shape corresponding to the cross sectional shape of the knob rotation shaft 652, and thus during the rotation of the knob body 660, a rotational force thereof may be effectively transmitted to the knob rotation shaft 652.

Multiple reinforcing ribs 662a may be formed on the outer surface of the shaft coupling part 662 by extending radially therefrom. The reinforcing ribs 662a may connect the inner surface of the knob body 660 with the shaft coupling part 662. The reinforcing ribs 662a may include multiple reinforcing ribs and may be disposed at predetermined intervals to reinforce the entirety of the knob body 660.

The knob body 660 may be formed of a light-passing material or a light-reflecting material. A part of the knob body 660 located behind the knob decoration 650 may be located at the inner side of the outer knob hole 534b and at the inner side of the ring opening 670a and may emit light when the inner LED L2 is turned on.

In the knob body 660, at least the first knob protrusion part 660b and the second knob protrusion part 660c may be made of a light-passing material or a light-reflecting material. Accordingly, when the inner LED L2 is turned on, the shape of a shining band may be displayed along the circumference of the knob decoration 650 when viewed from the outside.

The knob ring 670 may be located at a position corresponding to the outer knob hole 534b. Additionally, the knob ring 670 may have the ring opening 670a open in the center thereof, and the knob body 660 may be located in the ring opening 670a.

The ring opening 670a may be formed in the center portion of the knob ring 670 so as to have a disk shape, and may be configured to be smaller than the outer knob hole 534b such that the ring opening 670a can be located inside the outer knob hole 534b.

In addition, the knob ring 670 may include an exposed part 670b formed along the circumference of the ring opening 670a, and a casing seating part 670c formed along the circumference of the exposed part 670b.

The exposed part 670b may constitute the circumference of the ring opening 670a and may be exposed through the outer knob hole 534b to the outside. Accordingly, the inner diameter of the exposed part 670b may be equal to or slightly larger than the inner diameter of the ring opening 670a, that is, the diameter of the first knob protrusion part 660b. In this case, the inner diameter of the exposed part 670b may be smaller than the outer diameter of the second knob protrusion part 660c such that the knob body 660 is not removed.

The front surface of the exposed part 670b may be formed to be inclined. That is, the front surface of the exposed part 670b may be configured to be inclined by being recessed rearward gradually toward the inside thereof, and thus light emitted by the outer LEDs L1 may be refracted to be directed to the outer surface of the knob body 660.

The casing seating part 670c may extend outward from the outer end of the exposed part 670b. Additionally, the casing seating part 670c may be formed to be stepped from the end part of the exposed part 670b and may provide a surface on which the outer casing 534 can be seated. Accordingly, the circumferential surface of the outer knob hole 534b of the outer casing 534 may be supported by the knob ring 670. In this case, the end part of the exposed part 670b and the casing seating part 670c may be configured to have a step having height corresponding to the thickness of the outer casing 534.

An adhesive member (not shown) may be provided on the front surface of the casing seating part 670c. Such an adhesive member may allow the casing seating part 670c and the outer casing 534 to adhere to each other. A portion of the knob 502 may be adhered to the outer casing 534 by the adhesive member (not shown). The adhesive member (not shown) may be provided by applying an adhesive sheet, a tape, or an adhesive on the casing seating part 670c.

As illustrated in FIG. 17, the knob ring 670 provided on one side (a left or front side in FIG. 17) of the light guide 680 may have a ring shape and may be made of a material through which light emitted by the LEDs L 1 and L2 of the main PCB module 560 can pass. Furthermore, a ring-shaped elastic member 675 having a cushioning function may be provided between the light guide 680 and the knob ring 670.

The light guide 680 and the knob ring 670 may be coupled to each other, and to this end, a guide fastening protrusion 682 and a ring fastening part 672 may be formed on the light guide 680 and the knob ring 670, respectively, such that the guide fastening protrusion 682 and the ring fastening part 672 correspond to each other to be coupled to each other.

In the embodiment, the ring fastening part 672 is illustrated to be formed on the knob ring 670, and the guide fastening protrusion 682 is illustrated to be formed on the light guide 680.

Specifically, the ring fastening part 672 may include multiple ring fastening parts formed on the knob ring 670 such that the knob ring 670 is fastened to the light guide 680. As illustrated in FIG. 17, the ring fastening part 672 may be formed on the rear surface of the knob ring 670 by protruding rearward therefrom. That is, the ring fastening part 672 may be formed on one surface (an outer circumferential surface) of the knob ring 670 by protruding to one side (outward) therefrom.

The ring fastening part 672 may be coupled to the guide fastening protrusion 682 of the light guide 680 to be described below. Accordingly, a ring fastening part recess 672a may be formed in the ring fastening part 672 by being recessed inward (to a rear side in FIG. 18) from an end (a front end in FIG. 18) thereof such that a guide protrusion part 682b of the guide fastening protrusion 682 is received in the ring fastening part recess 672a. That is, the ring fastening part recess 672a may be formed in the center of the ring fastening part 672 such that the guide protrusion part 682b of the guide fastening protrusion 682 to be described below is inserted into the ring fastening part recess 672a.

As illustrated in FIG. 17, the ring fastening part recess 672a may be formed to be recessed by a predetermined depth from the center of the rear end (a front end in FIG. 18) of the ring fastening part 672 to the front (a rear in FIG. 18) thereof.

When the guide fastening protrusion 682 of the light guide 680 to be described below is coupled to the ring fastening part 672, the knob ring 670 and the light guide 680 may be securely coupled to each other at a precise position.

The knob ring 670 may be made of a material through which light can pass, and the exposed part 670b exposed through the outer knob hole 534b may be made of a material through which light can pass. Accordingly, the light of the outer LEDs L1 emitted through the light guide 680 may pass through the exposed part 670b, and when a specific outer LED L1 among the multiple outer LEDs L1 is turned, light may pass through a part of the exposed part 670b corresponding thereto and may be displayed.

The light guide 680 may constitute the rearmost end of the knob 502 and may allow the knob 502 and the main PCB module 560 to be substantially coupled to each other. Additionally, while in close contact with the main PCB module 560, the light guide 680 may be configured to guide light emitted by the outer LEDs L1 and the inner LEDs L2.

The light guide 680 may be composed of the outer part 680a and the inner part 680b which respectively have ring shapes, wherein the inner part 680b may be located inside the outer part 680a.

At least two guide fastening protrusions 682 may be formed on the circumference of the outer part 680a. Each of the guide fastening protrusions 682 may be a part coupled to the ring fastening part 672 of the knob ring 670. Accordingly, the guide fastening protrusion 682 may be formed at a position corresponding to the ring fastening part 672.

The guide fastening protrusion 682 may be formed on the outer circumferential surface of the outer part 680a by protruding outward therefrom and may include four guide fastening protrusions formed at the same intervals on the upper, lower, left, and right sides of the outer circumferential surface of the outer part 680a. However, in the embodiment, the guide fastening protrusion 682 is illustrated to include guide fastening protrusions formed on the left, right, and lower sides of the outer circumferential surface of the outer part 680a.

The guide fastening protrusion 682 may be composed of a protrusion support part 682a formed on the outer circumferential surface of the outer part 680a by protruding outward therefrom, and the guide protrusion part 682b formed on one surface of the protrusion support part 682a by protruding to a side therefrom. The guide protrusion part 682b is illustrated to be formed by protruding and extending from the front surface (a rear surface in FIG. 21) of the protrusion support part 682a forward (rearward in FIG. 21).

The guide protrusion part 682b may be configured to have a size corresponding to a size of the ring fastening part recess 672a so as to be selectively inserted into the ring fastening part recess 672a. That is, when the light guide 680 and the knob ring 670 are coupled to each other, the guide protrusion part 682b may be inserted into the ring fastening part recess 672a, and when the light guide 680 and the knob ring 670 are separated from each other, the guide protrusion part 682b may be removed from the ring fastening part recess 672a.

The guide protrusion part 682b may have a tapered shape so as to have an outer diameter decreasing gradually toward an end thereof. That is, the guide protrusion part 682b may be configured to have an outer diameter decreasing gradually forward (rearward in FIG. 21), and may be easily inserted into the ring fastening part recess 672a to be forcibly fitted thereto.

The end of the guide protrusion part 682b (a front end in FIG. 20) may be configured to have an outer diameter having a size smaller than the size of the inner diameter of the ring fastening part recess 672a, and the root end (a rear end in FIG. 20) of the guide protrusion part 682b may have an outer diameter having a size equal to or larger than the size of the inner diameter of the ring fastening part recess 672a.

Accordingly, the outer diameter of the front end (a rear end in FIG. 21) of the guide protrusion part 682b may be smaller than the inner diameter of the ring fastening part recess 672a of the ring fastening part 672, and the outer diameter of the rear end (a front end in FIG. 21) of the guide protrusion part 682b may be corresponding to or larger than the inner diameter of the ring fastening part recess 672a of the ring fastening part 672. This is intended to facilitate the coupling of the knob ring 670 with the light guide 680 and to securely hold the knob ring 670 to the light guide 680 when the knob ring 670 is coupled with the light guide 680.

When the guide fastening protrusion 682 is fastened to the ring fastening part 672, the front surface of the light guide 680 may be in complete close contact with the rear surface of the knob ring 670.

Light holes 684 may be formed in the outer part 680a. The light holes 684 may be formed at positions corresponding to the outer LEDs L1, respectively, and may be formed through the front and rear surfaces of the outer part 680a. Additionally, each of the light holes 684 may be formed to have a size to receive each of the outer LEDs L1.

The light hole 684 open in the rear surface of the outer part 680a may be configured to have a size larger than the size of the outer LED L1, and the outer LED L1 may be located inside the rear end part (a front end part in FIG. 21) of the light hole 684.

Specifically, the light hole 684 may be configured to have a tapered shape such that the light hole has an inner diameter decreasing gradually toward the front surface of the outer part 680a from the rear surface of the outer part 680a, and thus light emitted by the outer LED L1 may be gradually more concentrated forward, so the light may be displayed as the shape of a spot by passing through the exposed part 670b of the knob ring 670. That is, the light hole 684 may prevent light emitted by the outer LED L1 from spreading widely and may allow the light to be clearly displayed on the exposed part 670b of the knob ring 670 such that the light is visible to a user.

The light hole 684 may include multiple light holes disposed along the outer part 680a. Meanwhile, in the outer part 680a, a blocking part 684a in which the light holes 684 are not formed may be formed. The blocking part 684a may be provided on the lower end part of the outer part 680a, and may be a part through which the light of the outer LED L1 does not pass. The manipulation of the knob 502 may be effectively input only when the knob body 660 is rotated up to the point of passing the blocking part 684a such that the outer LED L1 can be lit. Accordingly, the blocking part 684a may be configured to have a preset angle formed in opposite directions relative to an extension line passing through the center of the light guide 680.

The inner part 680b may be disposed inside the outer part 680a by being spaced apart therefrom, and multiple connecting parts 680c may be formed between the inner part 680b and the outer part 680a. The multiple connecting parts 680c may be disposed to be spaced apart from each other at predetermined intervals. Accordingly, guide openings 680d through which the inner LEDs L2 pass may be formed between the outer part 680a, the inner part 680b, and the connecting parts 680c neighboring thereto.

The guide openings 680d may be formed at positions corresponding to the inner LEDs L2. Additionally, at least one inner LED L2 may be located in each of the guide openings 680d, and thus light emitted by the inner LED L2 may be guided to pass through the guide opening 680d and to be directed forward.

In this case, the position of the guide opening 680d may correspond to the position of the second knob protrusion part 660c which is located on the rear end part of the knob body 660. Accordingly, the guide opening 680d may be configured such that light emitted by the inner LED L2 can illuminate the rear end of the knob body 660.

The multiple guide coupling protrusions 686 may be formed on the inner circumference of the inner part 680b by extending rearward therefrom. The guide coupling protrusions 686 may be formed respectively at positions corresponding to the PCB coupling holes 560a formed in the main PCB module 560.

The guide coupling protrusions 686 may include multiple guide coupling protrusions, and may extend rearward from the rear end of the inner part 680b and may be inserted into the PCB coupling holes 560a, respectively. Each of the guide coupling protrusion 686 may be configured to have a hook shape, and may be inserted into and fastened to the PCB coupling hole 560a, and may allow the front surface of the main PCB module 560 to be coupled to the rear surface of the light guide 680 by being in close contact therewith.

When the light guide 680 is coupled to the main PCB module 560 by being in close contact therewith, the outer LEDs L1 may be located respectively inside the light holes 684 of the outer part 680a, and the inner LEDs L2 may be located inside the guide openings 680d, respectively. Accordingly, light emitted by the outer LEDs L1 and the inner LEDs L2 may be guided through the light guide 680 and may be directed forward.

A guide extension part 688 may be formed on the inner circumference of the inner part 680b by extending forward therefrom. Additionally, the guide extension part 688 may extend up to the inside of the knob body 660.

A shaft passing hole 688a may be formed in the end part of the guide extension part 688, and the knob rotation shaft 652 may pass through the shaft passing hole 688a and may be coupled to the shaft coupling part 662 of the knob body 660.

Due to such a structure, the knob 502 may be mounted to the main PCB module 560 and may guide light emitted by the outer LEDs L1 and the inner LEDs L2 of the main PCB module 560.

Meanwhile, the blender of the present disclosure, a misassembly prevention means which allows the knob 502 to be coupled to the precise position of the main PCB module 560 may be provided in the main body 500.

The misassembly prevention means may be composed of the knob 502, and a guiding protrusion(s) 690 and/or 691 and the guiding hole(s) 692 and/or 693 which are provided on the main PCB module 560 and/or the knob 502. That is, in the misassembly prevention means, the guiding protrusions 690 and 691 and the guiding holes 692 and 693 may be formed on the knob 502 and the main PCB module 560, respectively, such that the guiding protrusions 690 and 691 and the guiding holes 692 and 693 correspond to each other to be coupled to each other. Alternatively, each of the guiding protrusions 690 and 691 and the guiding holes 692 and 693 may be formed on the main PCB module 560 and the knob 502, respectively, to be coupled to each other.

In the embodiment of the present disclosure, the guiding protrusions 690 and 691 are illustrated to be provided on the knob 502, and the guiding holes 692 and 693 are illustrated to be formed in the main PCB module 560. However, the guiding protrusions 690 and 691 may be provided on the main PCB module 560, and the guiding holes 692 and 693 may be formed in the knob 502.

More specifically, as described above, the knob 502 may be composed of the knob decoration 650 constituting the exterior of the knob, the knob body 660 received inside the knob decoration 650, and the light guide 680 which guides light emitted by the LEDs L1 and L2 of the main PCB module 560.

Accordingly, any one of the guiding protrusion 690 or 691 and the guiding hole 692 or 693 may be formed in the light guide 680 constituting the knob 502, and in the embodiment, the guiding protrusion 690 or 691 is provided on the light guide 680.

The guiding protrusion 690 or 691 and the guiding hole 692 or 693 may be provided with multiple guiding protrusions and multiple guiding holes, respectively, wherein the multiple guiding protrusions 690 and 691 may be configured to have different sizes, and the multiple guiding holes 692 and 693 may be configured to have different sizes. Accordingly, the reason in which the guiding protrusion 690 or 691 is configured to include at least two guiding protrusions having different sizes and the guiding hole 692 or 693 is configured to include at least two guiding holes having different sizes is intended to guide a more precise assembly direction of each of the associated components and to prevent the movement thereof after assembly.

The guiding protrusion 690 or 691 may be formed on one surface of the light guide 680 by protruding outward therefrom as illustrated in FIGS. 20 and 21, and the guiding hole 692 or 693 may be formed may be formed in the main PCB module 560.

The guiding protrusion 690 or 691 may be composed of a first guiding protrusion 690 formed between the left end (a right end in FIG. 21) and upper end of the light guide 680, and a second guiding protrusion 691 formed between the right end (a left end in FIG. 21) and lower end of the light guide 680. Accordingly, the first guiding protrusion 690 and the second guiding protrusion 691 may be formed at positions symmetrical to each other relative to the center of the light guide 680. The positions of the first guiding protrusion 690 and the second guiding protrusion 691 shown in the FIGs are not limiting. Simply put, the first guiding protrusion 690 and the second guiding protrusion 691 are positioned spaced apart from each other.

The guiding protrusion 690 or 691 may be composed of a guiding protrusion support part 690a or 691a formed on the outer circumferential surface of the light guide 680 by protruding outward therefrom, and a guiding protrusion part 690b or 691b formed on the guiding protrusion support part 690a or 691a by extending therefrom to protrude to a side, e.g. protruding towards the main PCB module 560.

Specifically, as illustrated in FIG. 20, the guiding protrusion support part 690a or 691a may be formed on the rear end or rear side or rear face (i.e. the end or side or face facing the main PCB module 560) of the outer circumferential surface of the light guide 680 by protruding outward therefrom to have a predetermined height, and the guiding protrusion part 690b or 691b may be formed on the rear end of the guiding protrusion support part 690a or 691a by protruding rearward therefrom to have a predetermined size.

The guiding protrusion part 690b or 691b may have a tapered shape. That is, the guiding protrusion part 690b or 691b may be configured to have an outer diameter decreasing gradually rearward (forward in FIG. 21), and the end of the guiding protrusion part 690b or 691b may be configured to have a hemispherical shape. This is intended to efficiently insert the guiding protrusion part 690b or 691b into the guiding hole 692 or 693.

As described above, when the guiding protrusion 690 or 691 includes a pair of guiding protrusions, the guiding protrusion 690 or 691 may be composed of the first guiding protrusion 690 and the second guiding protrusion 691 as illustrated in FIGS. 20 and 21, wherein the first guiding protrusion 690 may be composed of a first guiding protrusion support part 690a and a first guiding protrusion part 690b, and the second guiding protrusion 691 may be composed of a second guiding protrusion support part 691a and a second guiding protrusion part 691b.

In addition, the first guiding protrusion 690 may be formed to be larger than the second guiding protrusion 691. Specifically, the first guiding protrusion part 690b of the first guiding protrusion 690 may be formed to be larger than the second guiding protrusion part 691b of the second guiding protrusion 691.

As illustrated in FIG. 19, the pair of guiding holes 692 and 693 corresponding to the pair of guiding protrusions 690 and 691 may be formed in the main PCB module 560. That is, the pair of guiding holes 692 and 693 may be formed to have predetermined diameters by passing through the main PCB module 560 in front-to-rear directions.

The guiding hole 692 or 693 may be composed of a first guiding hole 692 corresponding to the first guiding protrusion 690, and a second guiding hole 693 corresponding to the second guiding protrusion 691. That is, the first guiding hole 692 may be formed near the left corner of the upper half part of the main PCB module 560, and the second guiding hole 693 may be formed near the right corner of the lower half part of the main PCB module 560. The positions of the first guiding hole 692 and the second guiding hole 693 shown in the FIGs are not limiting. Simply put, the first guiding hole 692 and the second guiding hole 693 are positioned spaced apart from each other, and correspond to the first guiding protrusion 690 and the second guiding protrusion 691, respectively.

The first guiding hole 692 may be a part into which the first guiding protrusion 690 is inserted, and the second guiding hole 693 may be a part into which the second guiding protrusion 691 is inserted. Accordingly, the first guiding hole 692 may be configured to be larger than the second guiding hole 693.

Accordingly, the guiding protrusion 690 or 691 and the guiding hole 692 or 693 may be provided with multiple guiding protrusions and multiple guiding holes, respectively, and the outer diameter of the guiding protrusion part 690b or 691b may be configured to correspond to the inner diameter of the guiding hole 692 or 693. That is, the guiding protrusion 690 or 691 and the guiding hole 692 or 693 may be respectively composed of the first guiding protrusion 690 and the first guiding hole 692 formed on the light guide 680 and the main PCB module 560, respectively, such that the first guiding protrusion 690 and the first guiding hole 692 correspond to each other, and the second guiding protrusion 691 and the second guiding hole 693 provided at positions symmetrical to the first guiding protrusion 690 and the first guiding hole 692, respectively, relative to the centers of the light guide 680 and the main PCB module 560, respectively.

Furthermore, in the first guiding protrusion 690 and the second guiding protrusion 691, the sizes of the outer diameters of the guiding protrusion parts 690b and 691b may be different from each other, and the inner diameters of the first guiding hole 692 and the second guiding hole 693 may have sizes corresponding to the sizes of the outer diameters of the first guiding protrusion 690 and the second guiding protrusion 691, respectively. That is, the first guiding protrusion 690 and the first guiding hole 692 may be configured to have sizes corresponding to each other, and the second guiding protrusion 691 and the second guiding hole 693 may be configured to have sizes corresponding to each other. Accordingly, the embodiment, the first guiding protrusion 690 is configured to have a size larger than the size of the second guiding protrusion 691, and the first guiding hole 692 is configured to have a size larger than the size of the second guiding hole 693.

Accordingly, the reason in which the first guiding protrusion 690 and the second guiding protrusion 691 are configured to have different sizes, and the first guiding hole 692 and the second guiding hole 693 are configured to have different sizes is intended to increase the precision of the assembly of the associated components and to prevent the movement thereof as described above.

For example, in a case in which two guiding protrusions 690 and 691 are located at positions symmetrical to each other relative to the center of the light guide and have the same sizes, and two guiding holes 692 and 693 are located at positions symmetrical to each other relative to the center of the main PCB module and have the same sizes, the pair of guiding protrusions 690 and 691 and the pair of guiding holes 692 and 693 may be coupled to each other without distinction of vertical positions, so the light guide 680 may be mounted upside down to the main PCB module 560. Accordingly, when the light guide 680 is assembled upside down with the main PCB module 560, light emitted by the LEDs L1 and L2 of the main PCB module 560 may be blocked without being guided by the light guide 680.

In addition, as described above, the guiding protrusion part 690b or 691b of the guiding protrusion 690 or 691 may have a tapered shape and may be configured to have a size corresponding to the size of the guiding hole 692 or 693. Specifically, the end (a rear end in FIG. 20) of the guiding protrusion part 690b or 691b may have an outer diameter having a size smaller than the size of the inner diameter of the guiding hole 692 or 693, and the root end (a front end in FIG. 20) of the guiding protrusion part 690b or 691b may be configured to have an outer diameter having a size equal to the size of the inner diameter of the guiding hole 692 or 693. This is intended to allow the guiding protrusion part 690b or 691b to be efficiently inserted into and held in the guiding hole 692 or 693.

Hereinafter, the operation of the blender of the present disclosure having the above configuration will be described with reference to the accompanying drawings.

When the container body 100 is seated on the main body 500, the blender is in a state of FIG. 1, and in this state, the use of the blender of the present disclosure starts.

First, in order for a user to use the blender, power supply from the outside may be required, and this power supply may be wirelessly performed by the wireless power module 520. That is, power supply from the outside may be performed in a method of using an induced electromotive force, and of course, power supply may be performed by wire.

The power of the wireless power module 520 may be supplied to parts which require power, such as the motor assembly 600, the touch manipulation part 504, and the power transmission means 700, and a user may manipulate the starting or stopping of the blender by manipulating the touch manipulation part 504 or the knob 502.

For example, when a user is intended to start crushing food by manipulating the touch manipulation part 504 or the knob 502, the motor assembly 600 may be required to be operated to rotate the blades of the blade assembly 200.

However, in this case, the detection system may determine whether the container lid 400 is closed, and when the container lid 400 is opened, the motor assembly 600 and the blade assembly 200 may not operate.

Specifically, since the reed switch 234 is normally turned off, the power reception means 220, the reed switch 234, and the light transmission module 810 may not form a closed circuit in the container body 100, and thus the light reception means 820 may not receive light.

Accordingly, when the light reception means 820 does not receive light, due to such a signal, the supply of power to the motor assembly 600 may be blocked.

In this state, when the container lid 400 is closed, the permanent magnet 232 of the container lid 400 may approach the reed switch 234, and thus the reed switch 234 may be turned on. Accordingly, the power reception means 220, the reed switch 234, and the light transmission module 810 may formed a closed circuit, so the light reception means 820 may receive light generated by the light transmission module 810.

In this case, the closing of the container lid 400 may be detected, and according to the manipulation of a user, the operation of the motor assembly 600 may start and food inside the container body 100 may be crushed. Of course, in this case, the mounting of the container body 100 to the main body 500 may be detected by the container body detection switch 960, and the operation of the motor assembly 600 may start.

In addition, in this case, the operation state of the blender of the present disclosure may be displayed through the display part 506 to the outside, and thus a user may visually recognize the operation state or time of the blender.

Meanwhile, when a user opens or closes the container lid 400 of the container body 100, the user may open or close the container lid 400 by gripping the upper half part of the cap 450 with the hand. The container lid 400 may be in close contact with and held on the upper surface of the container body 100 by a user pushing the container lid 400 downward from a side above the container lid 400. In this case, a gap between the container lid 400 and the container body 100 may be covered by the gasket provided on the outer surface of the container lid 400.

Furthermore, the cap 450 mounted to the center portion of the container lid 400 may be removed therefrom by a user, and this is possible when a user grips the upper end of the cap 450 and rotates the cap 450 as described above.

When the cap 450 is removed from the container lid 400, a user may insert food into the container body 100 through the lid hole 401, and may control food inside the container body 100 with a rod passing through the lid hole 401.

Due to the operations of the motor assembly 600 and the blade assembly 200, food contained inside the container body 100 may be crushed or mixed and the work intended by a user may be completed. In this case, a user may move the container body 100 upward from the main body 500 to be removed therefrom, and then may open the container lid 400 to take out food contained inside the container body 100.

In addition, according to the operation of the motor assembly 600, the cooling fan 610 connected to the lower end of the motor shaft 622 may rotate. When the cooling fan 610 rotates, external air may be introduced into the main body 500 and then may be discharged to a side under the main body 500. Through such a process, electronic parts provided inside the main body 500 may be cooled.

Meanwhile, the knob 502 may be mounted to the main PCB module 560, and the outer LEDs L1, and light emitted by the inner LEDs L2 of the main PCB module 560 may be guided to the front of the main body 500 such that a user can recognize the light.

In addition, in the present disclosure, the misassembly prevention means may be provided in the main body 500, and may guide the coupling of the knob 502 to the precise position of the main PCB module 560. That is, the misassembly prevention means may be composed of the knob 502, and the pair of guiding protrusions 690 and 691 and the pair of the guiding holes 692 and 693 provided in the main PCB module 560, wherein the pair of guiding protrusions 690 and 691 may be configured to have different sizes, and the pair of guiding holes 692 and 693 may be configured to have different sizes.

Specifically, as described above, the first guiding protrusion 690 and the first guiding hole 692 may be configured to have sizes larger than the sizes of the second guiding protrusion 691 and the second guiding hole 693, respectively. Accordingly, when assembling the knob 502 with the main PCB module 560, the first guiding protrusion 690 may be inserted into the first guiding hole 692, but may not be inserted into the second guiding hole 693, so the light guide 680 constituting the knob 502 may be assembled with the main PCB module 560 only when the light guide 680 constituting the knob 502 corresponds vertically to the main PCB module 560.

For example, in the embodiment described above, the guide fastening protrusion 682 is formed on the outer circumferential surface of the outer part 680a by protruding outward therefrom, but may be formed on the front or rear surface of the outer part 680a.

In addition, the embodiment, the guide fastening protrusion 682 is composed of the protrusion support part 682a and the guide protrusion part 682b, but without the protrusion support part 682a, the guide protrusion part 682b may be formed on one surface of the light guide 680.

Furthermore, in the embodiment of the present disclosure, the guiding protrusions 690 and 691 having different sizes and the guiding holes 692 and 693 having different sizes are formed in pairs.

## Claims

1. A blender comprising:
a container body (100) for receiving food;
a main body (500) for receiving and supporting the container body (100);
a knob (502) provided at the main body (500) and configured to receive rotation manipulation for operating the blender;
a main PCB module (560) in the main body (500), wherein the knob (502) is coupled to the main PCB module (560); and
a misassembly prevention means (690, 691, 692, 693) provided at the knob (502) and the main PCB module (560) for guiding the knob (502) to be coupled to the main PCB module (560) in a predetermined orientation;
wherein the misassembly prevention means comprises:
a guiding protrusion (690, 691), and
a guiding hole (692, 693) configured to receive the guiding protrusion (690, 691),
wherein one of the guiding protrusion (690, 691) and the guiding hole (692, 693) is provided on the main PCB module (560), and the other of the guiding protrusion (690, 691) and the guiding hole (692, 693) is provided on the knob (502);
wherein the guiding protrusion (690, 691) includes a plurality of guiding protrusions (690, 691) and the guiding hole (692, 693) includes a plurality of guiding holes (692, 693);
**characterized in that**
the plurality of guiding protrusion (690, 691) includes at least two guiding protrusions (690, 691) having shapes and/or sizes different from each other, and wherein the plurality of guiding holes (692, 693) includes at least two guiding holes (692, 693) having shapes and/or sizes different from each other, and
wherein one of the at least two guiding protrusions (690, 691) has a shape and/or a size selectively corresponding to a shape and/or a size of one of the at least two guiding holes (692, 693), and
wherein the other of the at least two guiding protrusions (690, 691) has a shape and/or a size selectively corresponding to a shape and/or a size of the other of the at least two guiding holes (692, 693).

2. The blender of claim 1, wherein the knob (502) comprises:
a knob decoration (650) forming an exterior of the knob (502);
a knob body (660) received into the knob decoration (650); and
a light guide (680) configured to guide light emitted by an LED of the main PCB module (560),
wherein one of the guiding protrusion (690, 691) and the guiding hole (692, 693) is provided on the main PCB module (560), and the other of the guiding protrusion (690, 691) and the guiding hole (692, 693) is provided on the light guide (680) of the knob (502).

3. The blender of claim 2, wherein the guiding protrusion (690, 691) is formed on one surface of the light guide (680) by protruding therefrom, and the guiding hole (692, 693) is formed in the main PCB module (560).

4. The blender of claim 3, wherein the guiding protrusion (690, 691) comprises:
a guiding protrusion support part (690a, 691a) formed on an outer circumferential surface of the light guide (680) by protruding outward therefrom, and
a guiding protrusion part (690b, 691b) formed on the guiding protrusion support part (690a, 691a) by protruding therefrom.

5. The blender of claim 4, wherein the guiding protrusion part (690b, 691b) has an outer diameter having a shape and/or size corresponding to a shape and/or size of an inner diameter of the guiding hole (692, 693).

6. The blender of any one of the preceding claims, wherein the guiding protrusion (690, 691) and the guiding hole (692, 693) comprise:
- a first guiding protrusion (690) and a first guiding hole (692) formed on the light guide (680) and the main PCB module (560), respectively, such that the first guiding protrusion (690) and the first guiding hole (692) correspond to each other; and
- a second guiding protrusion (691) and a second guiding hole (693) provided at positions symmetrical to the first guiding protrusion (690) and the first guiding hole (692), respectively, relative to a center of the light guide (680) and/or a center of the main PCB module (560) and wherein the second guiding protrusion (691) and the second guiding hole (693) correspond to each other.

7. The blender of any one of the preceding claims, further comprising:
at least one guide coupling protrusion (686), and
at least one PCB coupling hole (560a) configured to receive the guide coupling protrusion (686) for coupling the knob (502) to the main PCB module (560);
wherein one of the at least one guide coupling protrusion (686) and the at least one PCB coupling hole (560a) is provided on the knob (502), and the other of the at least one guide coupling protrusion (686) and the at least one PCB coupling hole (560a) is provided on the main PCB module (560).

8. The blender of any one of the preceding claims when depending on claim 2, further comprising a knob ring (670) provided at a side of a light guide (680), wherein the knob ring (670) is made of a material through which light emitted by an LED of the main PCB module (560) passes towards an outside.

9. The blender of claim 8, further comprising a ring-shaped elastic member (675) having a cushioning function provided between the light guide (680) and the knob ring (670).

10. The blender of claim 8 or 9, wherein the light guide (680) comprises a guide fastening protrusion (682), and the knob ring (670) comprises a ring fastening part (672), wherein the guide fastening protrusion (682) and the ring fastening part (672) correspond to each other for being coupled to each other.

11. The blender of claim 10, wherein the guide fastening protrusion (682) is formed on an outer circumferential surface of the light guide (680) by protruding outward therefrom, and the ring fastening part (672) is formed on one surface of the knob ring (670) by protruding to a side therefrom.

## Patentansprüche

1. Mixer, der Folgendes umfasst:
einen Behälterkörper (100) zum Aufnehmen von Lebensmitteln;
einen Hauptkörper (500) zum Aufnehmen und Tragen des Behälterkörpers (100);
einen Drehknopf (502), der am Hauptkörper (500) vorgesehen ist und so konfiguriert ist, dass er für eine Bedienung durch Drehen zum Betreiben des Mixers geeignet ist;
ein Hauptplatinenmodul (PCB-Modul) (560) im Hauptkörper (500), wobei der Drehknopf (502) mit dem Hauptplatinenmodul (560) gekoppelt ist; und
Mittel (690, 691, 692, 693) zum Verhindern eines fehlerhaften Zusammenbaus, die am Drehknopf (502) und am Hauptplatinenmodul (560) vorgesehen sind, um den Drehknopf (502) so zu führen, dass er mit dem Hauptplatinenmodul (560) in einer zuvor festgelegten Orientierung gekoppelt ist;
wobei die Mittel zum Verhindern eines fehlerhaften Zusammenbaus Folgendes aufweisen:
einen Führungsvorsprung (690, 691), und
ein Führungsloch (692, 693), das konfiguriert ist, den Führungsvorsprung (690, 691) aufzunehmen,
wobei der Führungsvorsprung (690, 691) oder das Führungsloch (692, 693) auf dem Hauptplatinenmodul (560) vorgesehen ist und das jeweils andere des Führungsvorsprungs (690, 691) und des Führungslochs (692, 693) am Drehknopf (502) vorgesehen ist;
wobei der Führungsvorsprung (690, 691) mehrere Führungsvorsprünge (690, 691) umfasst, und das Führungsloch (692, 693) mehrere Führungslöcher (692, 693) umfasst;
**dadurch gekennzeichnet, dass**
die mehreren Führungsvorsprünge (690, 691) wenigstens zwei Führungsvorsprünge (690, 691) umfassen, die eine Form und/oder eine Größe haben, die sich voneinander unterscheiden, und wobei die mehreren Führungslöcher (692, 693) wenigstens zwei Führungslöcher (692, 693) umfassen, die eine Form und/oder eine Größe haben, die sich voneinander unterscheiden, und
wobei einer der wenigstens zwei Führungsvorsprünge (690, 691) eine Form und/oder eine Größe hat, die wahlweise einer Form und/oder einer Größe eines der wenigstens zwei Führungslöcher (692, 693) entspricht, und
wobei der jeweils andere der wenigstens zwei Führungsvorsprünge (690, 691) eine Form und/oder eine Größe hat, die wahlweise einer Form und/oder einer Größe des jeweils anderen der wenigstens zwei Führungslöcher (692, 693) entspricht.

2. Mixer nach Anspruch 1, wobei der Drehknopf (502) Folgendes umfasst:
ein Drehknopfdekor (650), das ein äußeres Erscheinungsbild des Drehknopfs (502) bildet;
einen Drehknopfkörper (660), der im Drehknopfdekor (650) aufgenommen ist; und
einen Lichtleiter (680), der konfiguriert ist, Licht, das durch eine LED des Hauptplatinenmoduls (560) emittiert wird, zu leiten,
wobei der Führungsvorsprung (690, 691) oder das Führungsloch (692, 693) auf dem Hauptplatinenmodul (560) vorgesehen ist und das jeweils andere des Führungsvorsprungs (690, 691) und des Führungslochs (692, 693) am Lichtleiter (680) des Drehknopfs (502) vorgesehen ist.

3. Mixer nach Anspruch 2, wobei der Führungsvorsprung (690, 691) an einer Oberfläche des Lichtleiters (680) ausgebildet ist und von diesem vorsteht und das Führungsloch (692, 693) im Hauptplatinenmodul (560) ausgebildet ist.

4. Mixer nach Anspruch 3, wobei der Führungsvorsprung (690, 691) Folgendes umfasst:
ein Teil (690a, 691a) zum Tragen des Führungsvorsprungs, das an einer Außenumfangsfläche des Lichtleiters (680) ausgebildet ist und von diesem nach außen vorsteht, und
ein Führungsvorsprungsteil (690b, 691b), das am Teil (690a, 691a) zum Tragen des Führungsvorsprungs ausgebildet ist und von diesem vorsteht.

5. Mixer nach Anspruch 4, wobei das Führungsvorsprungsteil (690b, 691b) einen Außendurchmesser aufweist, der eine Form und/oder eine Größe hat, die einer Form und/oder einer Größe eines Innendurchmessers des Führungslochs (692, 693) entspricht.

6. Mixer nach einem der vorhergehenden Ansprüche, wobei der Führungsvorsprung (690, 691) und das Führungsloch (692, 693) Folgendes umfassen:
- einen ersten Führungsvorsprung (690) und ein erstes Führungsloch (692), die am Lichtleiter (680) bzw. am Hauptplatinenmodul (560) ausgebildet sind, so dass der erste Führungsvorsprung (690) und das erste Führungsloch (692) einander entsprechen; und
- einen zweiten Führungsvorsprung (691) und ein zweites Führungsloch (693), die jeweils an Positionen symmetrisch zum ersten Führungsvorsprung (600) und zum ersten Führungsloch (692) relativ zur Mitte des Lichtleiters (680) und/oder zur Mitte des Hauptplatinenmoduls (560) vorgesehen sind, und wobei der zweite Führungsvorsprung (691) und das zweite Führungsloch (693) einander entsprechen.

7. Mixer nach einem der vorhergehenden Ansprüche, der ferner Folgendes umfasst:
wenigstens einen Führungskopplungsvorsprung (686), und
wenigstens ein Platinenkopplungsloch (560a), das konfiguriert ist, den Führungskopplungsvorsprung (686) zum Koppeln des Drehknopfs (502) mit dem Hauptplatinenmodul (560) aufzunehmen;
wobei der wenigstens eine Führungskopplungsvorsprung (686) oder das wenigstens eine Platinenkopplungsloch (560a) am Drehknopf (502) vorgesehen ist und das jeweils andere des wenigstens einen Führungskopplungsvorsprungs (686) und des wenigstens einen Platinenkopplungslochs (560a) am Hauptplatinenmodul (560) vorgesehen ist.

8. Mixer nach einem der vorhergehenden Ansprüche, wenn abhängig von Anspruch 2, der ferner einen Drehknopfring (670) umfasst, der an einer Seite eines Lichtleiters (680) vorgesehen ist, wobei der Drehknopfring (670) aus einem Material hergestellt ist, durch das Licht, das durch eine LED des Hauptplatinenmoduls (560) emittiert wird, nach außen gelangt.

9. Mixer nach Anspruch 8, der ferner ein ringförmiges elastisches Element (675) umfasst, das eine Federungsfunktion aufweist, das zwischen dem Lichtleiter (680) und dem Drehknopfring (670) vorgesehen ist.

10. Mixer nach Anspruch 8 oder 9, wobei der Lichtleiter (680) einen Führungsbefestigungsvorsprung (682) umfasst und der Drehknopfring (670) ein Ringbefestigungsteil (672) umfasst, wobei der Führungsbefestigungsvorsprung (682) und das Ringbefestigungsteil (672) einander entsprechen, so dass sie miteinander gekoppelt werden können.

11. Mixer nach Anspruch 10, wobei der Führungsbefestigungsvorsprung (682) an einer Außenumfangsfläche des Lichtleiters (680) ausgebildet ist und von diesem nach außen vorsteht und wobei das Ringbefestigungsteil (672) an einer Oberfläche des Drehknopfrings (670) ausgebildet ist und zu einer Seite vorsteht.

## Revendications

1. Mélangeur comportant :
un corps de récipient (100) pour recevoir des aliments ;
un corps principal (500) pour recevoir et supporter le corps de récipient (100) ;
un bouton (502) agencé sur le corps principal (500) et configuré pour recevoir une manipulation de rotation pour faire fonctionner le mélangeur ;
un module de PCB principale (560) dans le corps principal (500), dans lequel le bouton (502) est couplé au module de PCB principale (560) ; et
des moyens de prévention d'erreur d'assemblage (690, 691, 692, 693) agencés sur le bouton (502) et le module de PCB principale (560) pour guider le bouton (502), à coupler au module de PCB principale (560) dans une orientation prédéterminée ;
dans lequel les moyens de prévention d'erreur d'assemblage comportent :
une saillie de guidage (690, 691), et
un trou de guidage (692, 693) configuré pour recevoir la saillie de guidage (690, 691),
dans lequel un élément parmi la saillie de guidage (690, 691) et le trou de guidage (692, 693) est agencé sur le module de PCB principale (560), et l'autre élément parmi la saillie de guidage (690, 691) et le trou de guidage (692, 693) est agencé sur le bouton (502) ;
dans lequel la saillie de guidage (690, 691) inclut une pluralité de saillies de guidage (690, 691) et le trou de guidage (692, 693) inclut une pluralité de trous de guidage (692, 693) ;
**caractérisé en ce que** la pluralité de saillies de guidage (690, 691) inclut au moins deux saillies de guidage (690, 691) ayant des formes et/ou des tailles différentes l'une de l'autre, et dans lequel la pluralité de trous de guidage (692, 693) inclut au moins deux trous de guidage (692, 693) ayant des formes et/ou des tailles différentes l'une de l'autre, et
dans lequel l'une des au moins deux saillies de guidage (690, 691) a une forme et/ou une taille correspondant sélectivement à une forme et/ou une taille d'un des au moins deux trous de guidage (692, 693), et
dans lequel l'autre des deux saillies de guidage (690, 691) a une forme et/ou une taille correspondant sélectivement à une forme et/ou une taille de l'autre des au moins deux trous de guidage (692, 693).

2. Mélangeur selon la revendication 1, dans lequel le bouton (502) comporte :
un habillage de bouton (650) formant un extérieur du bouton (502) ;
un corps de bouton (660) reçu dans l'habillage de bouton (650) ; et
un conduit lumineux (680) configuré pour guider de la lumière émise par une LED du module de PCB principale (560),
dans lequel un élément parmi la saillie de guidage (690, 691) et le trou de guidage (692, 693) est agencé sur le module de PCB principale (560), et l'autre élément parmi la saillie de guidage (690, 691) et le trou de guidage (692, 693) est agencé sur le conduit lumineux (680) du bouton (502).

3. Mélangeur selon la revendication 2, dans lequel la saillie de guidage (690, 691) est formée sur une surface du conduit lumineux (680) en faisant saillie à partir de celui-ci, et le trou de guidage (692, 693) est formé dans le module de PCB principale (560).

4. Mélangeur selon la revendication 3, dans lequel la saillie de guidage (690, 691) comporte :
une partie de support de saillie de guidage (690a, 691a) formée sur une surface circonférentielle extérieure du conduit lumineux (680) en faisant saillie vers l'extérieur à partir de celui-ci, et
une partie de saillie de guidage (690b, 691b) formée sur la partie de support de saillie de guidage (690a, 691a) en faisant saillie à partir de celle-ci.

5. Mélangeur selon la revendication 4, dans lequel la partie de saillie de guidage (690b, 691b) a un diamètre extérieur ayant une forme et/ou une taille correspondant à une forme et/ou une taille d'un diamètre intérieur du trou de guidage (692, 693).

6. Mélangeur selon l'une quelconque des revendications précédentes, dans lequel la saillie de guidage (690, 691) et le trou de guidage (692, 693) comportent :
- une première saillie de guidage (690) et un premier trou de guidage (692) formés sur le conduit lumineux (680) et le module de PCB principale (560), respectivement, de telle sorte que la première saillie de guidage (690) et le premier trou de guidage (692) correspondent l'un à l'autre ; et
- une seconde saillie de guidage (691) et un second trou de guidage (693) agencés à des positions symétriques à la première saillie de guidage (690) et au premier trou de guidage (692), respectivement, par rapport à un centre du conduit lumineux (680) et/ou à un centre du module de PCB principale (560) et dans lequel la seconde saillie de guidage (691) et le second trou de guidage (693) correspondent l'un à l'autre.

7. Mélangeur selon l'une quelconque des revendications précédentes, comportant en outre :
au moins une saillie de couplage de conduit (686), et
au moins un trou de couplage de PCB (560a) configuré pour recevoir la saillie de couplage de conduit (686) pour coupler le bouton (502) au module de PCB principale (560) ;
dans lequel un élément parmi la au moins une saillie de couplage de conduit (686) et/ou le au moins un trou de couplage de PCB (560a) est agencé sur le bouton (502), et l'autre élément parmi la au moins une saillie de couplage de conduit (686) et le trou de couplage de PCB (560a) est agencé sur le module de PCB principale (560).

8. Mélangeur selon l'une quelconque des revendications précédentes lorsque dépendante de la revendication 2, comportant en outre une bague de bouton (670) agencée sur un côté d'un conduit lumineux (680), dans lequel la bague de bouton (670) est constituée d'un matériau à travers lequel de la lumière émise par une LED du module de PCB principale (560) passe vers un extérieur.

9. Mélangeur selon la revendication 8, comportant en outre un élément élastique en forme d'anneau (675) ayant une fonction d'amortissement, agencé entre le conduit lumineux (680) et la bague de bouton (670).

10. Mélangeur selon la revendication 8 ou 9, dans lequel le conduit lumineux (680) comporte une saillie de fixation de conduit (682), et la bague de bouton (670) comporte une partie de fixation de bague (672), dans lequel la saillie de fixation de guidage (682) et la partie de fixation de bague (672) correspondent l'une à l'autre pour être couplées l'une à l'autre.

11. Mélangeur selon la revendication 10, dans lequel la saillie de fixation de conduit (682) est formée sur une surface circonférentielle extérieure du conduit lumineux (680) en faisant saillie vers l'extérieur à partir de celui-ci, et la partie de fixation de bague (672) est formée sur une surface de la bague de bouton (670) en faisant saillie jusqu'à un côté à partir de celle-ci.
